(19) Europäisches Patentamt
European Patent Office
Office européen des brevets

(11) EP 0 802 941 B1

(12) EUROPÄISCHE PATENTSCHRIFT

(45) Veröffentlichungstag und Bekanntmachung des Hinweises auf die Patenterteilung:
**29.07.1998 Patentblatt 1998/31**

(21) Anmeldenummer: **96900924.0**

(22) Anmeldetag: **09.01.1996**

(51) Int Cl.6: **C08G 69/44**, C08G 18/60

(86) Internationale Anmeldenummer:
**PCT/EP96/00059**

(87) Internationale Veröffentlichungsnummer:
**WO 96/21690 (18.07.1996 Gazette 1996/33)**

# (54) BIOLOGISCH ABBAUBARE POLYMERE, VERFAHREN ZU DEREN HERSTELLUNG SOWIE DEREN VERWENDUNG ZUR HERSTELLUNG BIOABBAUBARER FORMKÖRPER

BIOLOGICALLY DEGRADABLE POLYMERS, PROCESSES FOR MANUFACTURING THE SAME AND THE USE THEREOF FOR PRODUCING BIODEGRADABLE MOULDED ARTICLES

POLYMERES BIODEGRADABLES, LEUR PROCEDE DE FABRICATION ET LEUR UTILISATION POUR LA FABRICATION DE CORPS MOULES BIODEGRADABLES

(84) Benannte Vertragsstaaten:
**BE CH DE DK ES FR GB IT LI NL SE**

(30) Priorität: **13.01.1995 DE 19500755**

(43) Veröffentlichungstag der Anmeldung:
**29.10.1997 Patentblatt 1997/44**

(73) Patentinhaber: **BASF AKTIENGESELLSCHAFT**
**67056 Ludwigshafen (DE)**

(72) Erfinder:
- **WARZELHAN, Volker**
  **D-67273 Weisenheim (DE)**
- **SCHORNICK, Gunnar**
  **D-67271 Neuleiningen (DE)**
- **BRAUN, Frank**
  **D-67063 Ludwigshafen (DE)**
- **SEELIGER, Ursula**
  **D-67059 Ludwigshafen (DE)**
- **YAMAMOTO, Motonori**
  **D-68199 Mannheim (DE)**
- **BAUER, Peter**
  **D-67071 Ludwigshafen (DE)**

(56) Entgegenhaltungen:
**EP-A- 561 224** **EP-A- 565 235**
**WO-A-92/13020**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 802 941 B1

Printed by Jouve, 75001 PARIS (FR)

## Beschreibung

Die vorliegende Erfindung betrifft biologisch abbaubare Polyetheresteramide P1, erhältlich durch Reaktion einer Mischung, bestehend im wesentlichen aus

(a1) einer Mischung, bestehend im wesentlichen aus

| | |
|---|---|
| 20 bis 95 mol-% | Adipinsäure oder esterbildende Derivate davon oder Mischungen davon, |
| 5 bis 80 mol-% | Terephthalsäure oder esterbildende Derivate davon oder Mischungen davon, und |
| 0 bis 5 mol-% | einer sulfonatgruppenhaltigen Verbindung, |

wobei die Summe der einzelnen Molprozentangaben 100 mol-% beträgt, und

(a2) einer Mischung aus Dihydroxyverbindungen, bestehend im wesentlichen aus

(a21) von 15 bis 99,3 mol-% einer Dihydroxyverbindung, ausgewählt aus der Gruppe bestehend aus $C_2$-$C_6$-Alkandiolen und $C_5$-$C_{10}$-Cycloalkandiolen,

(a22) von 0,2 bis 85 mol-% einer Etherfunktionen enthaltenden Dihydroxyverbindung gemäß Formel I

$$HO\text{-}[(CH_2)_n\text{-}O]_m\text{-}H \qquad I$$

in der n für 2, 3 oder 4 und m für eine ganze Zahl von 2 bis 250 stehen, oder Mischungen davon,

(a23) von 0,5 bis 80 mol-% eines Amino-$C_2$-$C_{12}$-alkanols oder eines Amino-$C_5$-$C_{10}$-cycloalkanols, und

(a24) von 0 bis 50 mol-% eines Diamino-$C_1$-$C_8$-Alkans,

(a25) von 0 bis 50 mol-% eines 2,2'-Bisoxazolins der allgemeinen Formel II

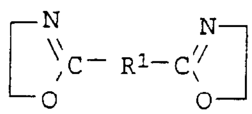

II

wobei $R^1$ eine Einfachbindung, eine $(CH_2)_q$-Alkylengruppe, mit q = 2, 3 oder 4, oder eine Phenylengruppe bedeutet, wobei die Summe der einzelnen Molprozentangaben 100 mol-% beträgt,
wobei man das Molverhältnis von (a1) zu (a2) im Bereich von 0,4:1 bis 1,5:1 wählt,
mit der Maßgabe, daß die Polyetheresteramide P1 ein Molekulargewicht ($M_n$) im Bereich von 5000 bis 80000 g/mol, eine Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200°C aufweisen, und mit der weiteren Maßgabe, daß man von 0 bis 5 mol-%, bezogen auf die Molmenge der eingesetzten Komponente (a1), eine Verbindung D mit mindestens drei zur Esterbildung befähigten Gruppen zur Herstellung der Polyetheresteramide P1 einsetzt.

Des weiteren betrifft die Erfindung Polymere und biologisch abbaubare thermoplastische Formmassen gemäß Unteransprüche, Verfahren zu deren Herstellung, deren Verwendung zur Herstellung biologisch abbaubarer Formkörper sowie Klebstoffe, biologisch abbaubare Formkörper, Schäume und Blends mit Stärke, erhältlich aus den erfindungsgemäßen Polymeren bzw. Formmassen.

Polymere, die biologisch abbaubar sind, d.h. die unter Umwelteinflüssen in einer angemessenen und nachweisbaren Zeitspanne zerfallen, sind seit einiger Zeit bekannt. Der Abbau erfolgt dabei in der Regel hydrolytisch und/oder oxidativ, zum überwiegenden Teil jedoch durch die Einwirkung von Mikroorganisman wie Bakterien, Hefen, Pilzen und Algen. Y.Tokiwa und T. Suzuki (Nature, Bd. 270, S. 76-78, 1977) beschreiben den enzymatischen Abbau von aliphatischen Polyestern, beispielsweise auch Polyester auf der Basis von Bernsteinsäure und aliphatischer Diole.

In der EP-A 565,235 werden aliphatische Copolyester, enthaltend [-NH-C(O)O-]-Gruppen ("Urethan-Einheiten"), beschrieben. Die Copolyester der EP-A 565,235 werden durch Umsetzung eines Präpolyesters - erhalten durch Umsetzung von im wesentlichen Bernsteinsäure und eines aliphatischen Diols - mit einem Diisocyanat, bevorzugt Hexamethylendiisocyanat, erhalten. Die Umsetzung mit dem Diisocyanat ist gemäß der EP-A 565,235 erforderlich, da durch die Polykondensation alleine nur Polymere mit solchen Molekulargewichten erhalten werden, die keine befriedigenden mechanischen Eigenschaften aufweisen. Von entscheidendem Nachteil ist die Verwendung von Bernsteinsäure oder deren Esterderivate zur Herstellung der Copolyester, weil Bernsteinsäure bzw. deren Derivate teuer und in nicht genügender Menge auf dem Markt verfügbar sind. Außerdem werden bei Verwendung von Bernsteinsäure als einziger Säurekomponente die daraus hergestellten Polyester nur extrem langsam abgebaut.

Aus der WO 92/13020 sind Copolyetherester auf Basis überwiegend aromatischer Dicarbonsäuren, kurzkettiger Etherdiol-Segmenten wie Diethylenglykol, langkettiger Polyalkylenglykole wie Polyethylenglykol (PEG) und aliphatischer Diole bekannt, wobei mindestens 85 mol-% des Polyesterdiolrestes aus einem Terephthalsäurerest bestehen. Durch Modifikationen wie den Einbau von bis zu 2,5 Mol-% Metallsalze der 5-Sulfoisophthalsäure kann die Hydrophilie des Copolyesters gesteigert und die Kristallinität vermindert werden. Hierdurch soll gemäß der WO 92/13020 ein biologischer Abbau der Copolyester ermöglicht werden. Nachteilig an diesen Copolyestern ist jedoch, daß ein biologischer Abbau durch Mikroorganismen nicht nachgewiesen wurde, sondern lediglich das Verhalten gegenüber Hydrolyse in kochendem Wasser durchgeführt wurde.

Nach Angaben von Y.Tokiwa und T.Suzuki (Nature, Bd. 270, 1977 oder J. of Appl. Polymer Science, Bd. 26, S. 441-448, 1981) ist davon auszugehen, daß Polyester, die weitgehend aus aromatischen Dicarbonsäure-Einheiten und aliphatischen Diolen aufgebaut sind, wie PET (Polyethylenterephthalat) und PBT (Polybutylenterephthalat), enzymatisch nicht abbaubar sind. Dies gilt auch für Copolyester und Copolyetherester, die Blöcke, aufgebaut aus aromatischen Dicarbonsäureeinheiten und aliphatischen Diolen bzw. Etherdiolen, enthalten.

Weiterhin wurden von Y.Tokiwa, T.Suzuki und T.Ando (J. of Appl. Polym. Sci. Vol. 24, S. 1701 - 1711 (1979), John Wiley & Sons) Polyesteramide sowie Blends aus Polycaprolacton und verschiedenen aliphatischen Polyamiden wie Polyamid-6, Polyamid-66, Polyamid-11, Polyamid-12 und Polyamid-69 durch Schmelzkondensation hergestellt und auf ihre biologische Abbaubarkeit durch Lipasen untersucht. Es wurde gefunden, daß die biologische Abbaubarkeit solcher Polyesteramide stark davon abhängt, ob eine überwiegend statistische Verteilung der Amidsegmente vorliegt oder etwa eine Blockstruktur. Allgemein bewirken Amidsegmente eher eine Verlangsamung des biologischen Abbaus durch Lipasen.

Entscheidend ist allerdings, daß keine längeren Amidblöcke vorliegen, da aus Plant. Cell Physiol., Vol. 7, S. 93 (1966), J. Biochem., Vol. 59 S. 537 (1966) sowie Agric. Biol. Chem., Vol. 39, S. 1219 (1975) bekannt ist, daß die üblichen aliphatischen und aromatischen Polyamide biologisch nicht abbaubar sind, sondern allenfalls deren Oligomere.

Witt et al. (Handout zu einem Poster auf dem International Workshop des Royal Institute of Technology, Stockholm, Schweden, vom 21.bis 23.04.94) beschreiben biologisch abbaubare Copolyester auf der Basis von 1,3-Propandiol, Terephthalsäureester und Adipin- oder Sebazinsäure. Nachteilig an diesen Copolyestern ist, daß daraus hergestellte Formkörper, insbesondere Folien, unzureichende mechanische Eigenschaften aufweisen.

Aufgabe der vorliegenden Erfindung war es daher, biologisch, d.h. durch Mikroorganismen, abbaubare Polymere bereitzustellen, die diese Nachteile nicht aufweisen. Insbesondere sollten die erfindungsgemäßen Polymere aus bekannten und preiswerten Monomerbausteinen herstellbar und wasserunlöslich sein. Des weiteren sollte es möglich sein, durch spezifische Modifikationen wie Kettenverlängerung, Einbau von hydrophilen Gruppen und verzweigend wirkenden Gruppen, maßgeschneiderte Produkte für die gewünschten erfindungsgemäßen Anwendungen zu erhalten. Dabei sollte der biologische Abbau durch Mikroorganismen nicht auf Kosten der mechanischen Eigenschaften erreicht werden, um die Zahl der Anwendungsgebiete nicht einzuschränken.

Demgemäß wurden die eingangs definierten Polymere und thermoplastischen Formmassen gefunden.

Des weiteren wurden Verfahren zu deren Herstellung, deren Verwendung zur Herstellung biologisch abbaubarer Formkörper und Klebstoffe sowie biologisch abbaubare Formkörper und Klebstoffe, erhältlich aus den erfindungsgemäßen Polymeren und Formmassen, gefunden.

Die erfindungsgemäßen Polyetheresteramide P1 sind charakterisiert durch ein Molekulargewicht ($M_n$) im Bereich von 5000 bis 80000, vorzugsweise von 6000 bis 45000, besonders bevorzugt von 8000 bis 35000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200, vorzugsweise von 60 bis 180°C.

Die Polyetheresteramide P1 erhält man erfindungsgemäß, indem man eine Mischung, bestehend im wesentlichen aus

(a1) einer Mischung, bestehend im wesentlichen aus

20 bis 95, vorzugsweise von 30 bis 80, besonders bevorzugt von 40 bis 70 mol-% Adipinsäure oder esterbildende Derivate davon, insbesondere die Di-$C_1$-$C_6$-alkylester wie Dimethyl-, Diethyl-, Dipropyl-, Dibutyl-, Diisobutyl-, Dipentyl- und Dihexyladipat, oder deren Mischungen, bevorzugt Adipinsäure und Dimethyladipat, oder Mischungen davon,

5 bis 80, vorzugsweise 20 bis 70, besonders bevorzugt von 30 bis 60 mol-%, Terephthalsäure oder esterbildende Derivate davon, insbesondere die Di-$C_1$-$C_6$-alkylester wie Dimethyl-, Diethyl-, Dipropyl-, Dibutyl-, Dipentyl- oder Dihexylterephthalat, oder deren Mischungen, bevorzugt Terephthalsäure und Dimethylterephthalat, oder Mischungen davon, und

0 bis 5, vorzugsweise von 0 bis 3, besonders bevorzugt von 0,1 bis 2 mol-% einer sulfonatgruppenhaltigen Verbindung,

wobei die Summe der einzelnen Molprozentangaben 100 mol-% beträgt, und

(a2) einer Mischung aus Dihydroxyverbindungen, bestehend im wesentlichen aus

(a21) von 15 bis 99,3, vorzugsweise von 60 bis 99,0, besonders bevorzugt von 70 bis 97,5 mol-% einer Dihydroxyverbindung, ausgewählt aus der Gruppe bestehend aus $C_2$-$C_6$-Alkandiolen und $C_5$-$C_{10}$-Cycloalkandiolen,

(a22) von 0,2 bis 85, vorzugsweise von 0,5 bis 40, besonders bevorzugt von 0,5 bis 30 mol-% einer Etherfunktionen-enthaltenden Dihydroxyverbindung gemäß Formel I

$$HO\text{-}[(CH_2)_n\text{-}O]_m\text{-}H \qquad I$$

in der n für 2, 3 oder 4, vorzugsweise zwei und drei, besonders bevorzugt zwei, und m für eine ganze Zahl von 2 bis 250, vorzugsweise von zwei bis 100 stehen, oder Mischungen davon,

(a23) von 0,5 bis 80, vorzugsweise von 0,5 bis 50, besonders bevorzugt von 1 bis 30 mol-% eines Amino-$C_2$-$C_{12}$-alkanols oder eines Amino-$C_5$-$C_{10}$-cycloalkanols, und

(a24) von 0 bis 50, vorzugsweise von 0 bis 35, besonders bevorzugt von 0,5 bis 30 mol-% eines Diamino-$C_1$-$C_8$-Alkans,

(a25) von 0 bis 50, vorzugsweise von 0 bis 30, besonders bevorzugt von 0,5 bis 20 mol-% eines 2,2'-Bisoxazolins der allgemeinen Formel II

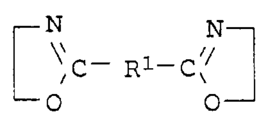

II

wobei $R^1$ eine Einfachbindung, eine $(CH_2)_q$-Alkylengruppe, mit q = 2, 3 oder 4, oder eine Phenylengruppe bedeutet, wobei die Summe der einzelnen Molprozentangaben 100 mol-% beträgt,
wobei man das Molverhältnis von (a1) zu (a2) im Bereich von 0,4:1 bis 1,5:1, vorzugsweise von 0,6:1 bis 1,25:1 wählt, zur Reaktion bringt.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Als Dihydroxyverbindungen (a21) setzt man erfindungsgemäß eine Verbindung, ausgewählt aus der Gruppe bestehend aus $C_2$-$C_6$-Alkandiolen und $C_5$-$C_{10}$-Cycloalkandiolen, ein wie Ethylenglykol, 1,2-, 1,3-Propandiol, 1,2-, 1,4-Butandiol, 1,5-Pentandiol oder 1,6-Hexandiol, insbesondere Ethylenglykol, 1,3-Propandiol und 1,4-Butandiol, Cyclopentandiol, Cyclohexandiol, 1,2-Cyclohexandimethanol, 1,4-Cyclohexandimethanol, besonders bevorzugt Ethylenglykol

und 1,4-Butandiol, sowie Mischungen daraus, ein.

Als Dihydroxyverbindungen (a22) setzt man bevorzugt Diethylenglykol, Triethylenglykol, Polyethylenglykol, Polypropylenglykol und Polytetrahydrofuran (Poly-THF) ein, wobei man auch Mischungen davon oder Verbindungen, die unterschiedliche n's aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid. Das Molekulargewicht ($M_n$) wählt man in der Regel im Bereich von 250 bis 8000, bevorzugt von 600 bis 3000 g/mol.

Als Amino-$C_2$-$C_{12}$-alkanol oder Amino-$C_5$-$C_{10}$-cyloalkanol (Komponente (a22)), wobei hierunter auch 4-Aminomethylcyclohexanmethanol fallen soll, setzt man bevorzugt Amino-$C_2$-$C_6$-alkanole wie 2-Aminoethanol, 3-Aminopropanol, 4-Aminobutanol, 5-Aminopentanol, 6-Aminohexanol sowie Amino-$C_5$-$C_6$-cyloalkanole wie Aminocyclopentanol und Aminocyclohexanol oder Mischungen davon ein.

Als Diamino-$C_1$-$C_8$-alkan setzt man bevorzugt Diamino-$C_4$-$C_6$-alkane ein wie 1,4-Diminobutan, 1,5-Diaminopentan und 1,6-Diaminohexan (Hexamethylendiamin, "HMD").

Die Verbindungen der allgemeinen Formel I (Komponente (a24) sind in der Regel erhältlich durch das Verfahren aus Angew. Chem. int. Edit., Vol. 11 (1972), S. 287-288.

Erfindungsgemäß verwendet man von 0 bis 5, vorzugsweise von 0,01 bis 4 mol-%, besonders bevorzugt von 0,05 bis 4 mol-%, bezogen auf die Komponente (a1), mindestens eine Verbindung D mit mindestens drei zur Esterbildung befähigten Gruppen.

Die Verbindungen D enthalten bevorzugt drei bis zehn funktionelle Gruppen, welche zur Ausbildung von Esterbindungen fähig sind. Besonders bevorzugte Verbindungen D haben drei bis sechs funktionelle Gruppen dieser Art im Molekül, insbesondere drei bis sechs hydroxylgruppen und/oder Carboxylgruppen. Beispielhaft seien genannt:

Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Beim Einsatz von Verbindungen D, die einen Siedepunkt unterhalb von 200°C aufweisen, kann bei der Herstellung der Polymester P1 ein Anteil vor der Reaktion aus dem Polykondensationsgemisch abdestillieren. Es ist daher bevorzugt, diese Verbindungen in einer frühen Verfahrensstufe wie der Umesterungs- bzw. Veresterungsstufe zuzusetzen, um diese Komplikation zu vermeiden und um die größtmögliche Regelmäßigkeit ihrer Verteilung innerhalb des Polykondensats zu erzielen.

Im Falle höher als 200°C siedender Verbindungen D können diese auch in einer späteren Verfahrensstufe eingesetzt werden.

Durch Zusatz der Verbindung D kann beispielsweise die Schmelzviskosität in gewünschter Weise verändert, die Schlagzähigkeit erhöht und die Kristallinität der erfindungsgemäßen Polymere bzw. Formmassen herabgesetzt werden.

Die Herstellung der biologisch abbaubaren Polyetheresteramide P1 ist grundsätzlich bekannt (Sorensen und Campbell, "Preparative Methods of Polymer Chemistry", Interscience Publishers, Inc., New York, 1961, Seiten 111 bis 127; Encyl. of Polym. Science and Eng., Bd. 12, 2. Ed., John Wiley & Sons, 1988, S. 75 bis 117; Kunststoff-Handbuch, Band 3/1, Carl Hanser Verlag, München, 1992, S. 15 bis 23 (Herstellung von Polyesteramiden); WO 92/13020; EP-A 568,593; EP-A 565,235; EP-A 28,687 (herstellung von Polyestern); Encyl. of Polym. Science and Eng., Bd. 12, 2nd Ed., John Wiley & Sons, 1988, S. 1 bis 75, insbesondere S. 59 und 60; GB-PS 818,157; GB-PS 1,010,916; GB-PS 1,115,512), so daß sich nähere Angaben hierüber erübrigen.

So kann man beispielsweise die Umsetzung von Dimethylestern der Komponente (a1) mit der Komponente (a2) bei Temperaturen im Bereich von 160 bis 230°C in der Schmelze bei Atmosphärendruck vorteilhaft unter Inertgasatmosphäre durchführen.

In einer bevorzugten Ausführungsform wird zunächst die gewünschte Aminohydroxyverbindung (a23) mit der Komponente (a1), bevorzugt Terephthalsäure, Dimethylester der Terephthalsäure, Adipinsäure, Di-$C_2$-$C_6$-alkylester der Adipinsäure, Bernsteinsäureanhydrid, Phthalsäureanhydrid, in einem molaren Verhältnis von 2:1 umgesetzt.

In einer weiteren bevorzugten Ausführungsform wird die gewünschte Diaminverbindung (a24) mit der Komponente (a1), bevorzugt Terephthalsäure, Dimethylester der Terephthalsäure, Adipinsäure, Di-$C_2$-$C_6$-alkylester der Adipinsäure, Bernsteinsäureanhydrid, Phthalsäureanhydrid, in einem molaren Verhältnis von mindestens 0,5:1, bevorzugt 0,5:

1, umgesetzt.

In einer weiteren bevorzugten Ausführungsform wird das gewünschte Bisoxazolin (a25) mit der Komponente (a1), bevorzugt Terephthalsäure, Dimethylester der Terephthalsäure, Adipinsäure, Di-$C_2$-$C_4$-alkylester der Adipinsäure, Bernsteinsäureanhydrid, Phthalsäureanhydrid, in einem molaren Verhältnis von mindestens 0,5:1, bevorzugt 0,5:1, umgesetzt.

Bei Vorliegen einer Mischung von mindestens einer Aminohydroxyverbindung (a23) und mindestens einer Diaminoverbindung (a24) und mindestens eines 2,2'-Bisoxazolins (a25) werden diese zweckmäßig gemäß den in den zuvor genannten bevorzugten Ausführungsformen aufgeführten molaren Mengen mit Komponente (a1) umgesetzt.

Vorteilhaft wird bei der Herstellung des biologisch abbaubaren Polyetheresteramides P1 ein molarer Überschuß der Komponente (a2), bezogen auf die Komponente (a1), verwendet, beispielsweise bis zum 2 1/2fachen, bevorzugt bis zum 1,67fachen.

Üblicherweise erfolgt die Herstellung des biologisch abbaubaren Polyetheresteramides P1 unter Zugabe von geeigneten, an sich bekannten Katalysatoren (Encyl. of Polym. Science and Eng., Bd. 12, 2nd Ed., John Wiley & Sons, 1988, S. 1 bis 75, insbesondere S. 59 und 60; GB-PS 818,157; GB-PS 1,010,916; GB-PS 1,115,512) wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Lithium, Zink, Zinn und Titan.

Bei Verwendung von Dicarbonsäuren oder deren Anhydride als Komponente (a1) kann deren Veresterung mit Komponente (a2) vor, gleichzeitig oder nach der Umesterung stattfinden. Beispielsweise kann das in der DE-A 23 26 026 beschriebene Verfahren zur Herstellung modifizierter Polyalkylenterephthalate verwendet werden.

Nach der Umsetzung der Komponenten (a1) und (a2) wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt.

Um unerwünschte Abbau- und/oder Nebenreaktionen zu vermeiden, kann man in dieser Verfahrensstufe gewünschtenfalls auch Stabilisatoren (siehe EP-A 21042 und US-A 4,321,341) zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebene Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (beispielsweise als Uvinul® 2003AO (BASF) erhältlich).

Bei der Verwendung der erfindungsgemäßen biologisch abbaubaren Copolymere, beispielsweise im Verpackungsbereich z.B. für Nahrungsmittel, ist es in der Regel wünschenswert, den Gehalt an eingesetztem Katalysator so gering als möglich zu wählen sowie keine toxischen Verbindungen einzusetzen. Im Gegensatz zu anderen Schwermetallen wie Blei, Zinn, Antimon, Cadmium, Chrom sind Titan- und Zinkverbindungen in der Regel nicht toxisch ("Sax Toxic Substance Data Book", Shizuo Fujiyama, Maruzen, K.K., 360 S. (zitiert in EP-A 565,235), siehe auch Römpp Chemie Lexikon Bd. 6, Thieme Verlag, Stuttgart, New York, 9. Auflage, 1992, S. 4626 bis 4633 und 5136 bis 5143). Beispielhaft seien genannt: Dibutoxydiacetoacetoxytitan, Tetrabutylorthotitanat und Zink(II)-acetat.

Das Gewichtsverhältnis von Katalysator zu biologisch abbaubaren Polyetheresteramide P1 liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der biologisch abbaubaren Polyetheresteramide P1 eingesetzt werden. Gewünschtenfalls können auch verschiedene Katalysatoren oder auch Gemische davon eingesetzt werden.

Die erfindungsgemäßen biologisch abbaubaren Polyetheresteramide P2 sind charakterisiert durch ein Molekulargewicht ($M_n$) im Bereich von 5000 bis 80000, vorzugsweise von 6000 bis 45000, besonders vorzugsweise von 10000 bis 40000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid P2 bei einer Temperatur von 25°C) und einen Schmelzpunkt im Bereich von 50 bis 255, vorzugsweise von 60 bis 255°C aufweisen.

Die biologisch abbaubaren Polyetheresteramide P2 erhält man erfindungsgemäß, indem man eine Mischung zur Reaktion bringt, bestehend im wesentlichen aus

(b1) einer Mischung, bestehend im wesentlichen aus

20 bis 95, bevorzugt von 25 bis 80, besonders bevorzugt von 30 bis 70 mol-% Adipinsäure oder esterbildende Derivate davon oder Mischungen davon,

5 bis 80, bevorzugt von 20 bis 75, besonders bevorzugt von 30 bis 70 mol-% Terephthalsäure oder esterbildende Derivate davon oder Mischungen davon, und

0 bis 5, bevorzugt von 0 bis 3, besonders bevorzugt von 0,1 bis 2 mol-% einer sulfonatgruppenhaltigen Verbindung,

wobei die Summe der einzelnen Molprozentangaben 100 mol-% beträgt,

(b2) Mischung (a2),
wobei man das Molverhältnis von (b1) zu (b2) im Bereich von 0,4:1 bis 1,25:1, vorzugsweise von 0,6:1 bis 1,25:1 wählt,

(b3) von 0,01 bis 40, vorzugsweise von 0,1 bis 30, besonders bevorzugt von 0,5 bis 20 Gew.-%, bezogen auf Komponente (b1), einer Komponente B1, und

(b4) von 0 bis 5, vorzugsweise von 0 bis 4, besonders bevorzugt von 0,01 bis 3,5 mol-%, bezogen auf Komponente (b1), Verbindung D,
wobei die Komponente B1 ausgewählt ist aus der Gruppe bestehend aus den natürlichen Aminosäuren, Polyamiden mit einem Molekulargewicht von höchstens 18 000 g/mol, bevorzugt höchstens 15 000 g/mol und Verbindungen, die definiert sind durch die Formeln IIIa oder IIIb

$$HO\text{-}[\text{-}C(O)\text{-}G\text{-}N(H)\text{-}]_pH \qquad \text{IIIa}$$

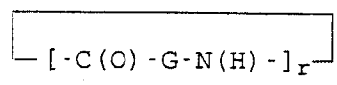

IIIb

in der p eine ganze Zahl von 1 bis 1500, vorzugsweise von 1 bis 1000 und r 1, 2, 3 oder 4, vorzugsweise 1 und 2, bedeuten, und G für einen Rest steht, der ausgewählt ist aus der Gruppe bestehend aus Phenylen, $-(CH_2)_n-$, wobei n eine ganze Zahl von 1 bis 12, vorzugsweise 1, 5 oder 12, bedeutet, $-C(R)^2H-$ und $-C(R^2)HCH_2$, wobei $R^2$ für Methyl oder Ethyl steht, sowie Polyoxazoline der allgemeinen Formel IV

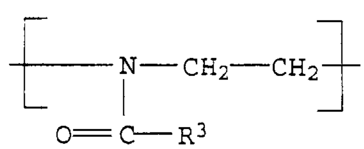

IV

in der $R^3$ für Wasserstoff, $C_1$-$C_6$-Alkyl, $C_5$-$C_8$-Cycloalkyl, unsubstituiertes oder mit $C_1$-$C_4$-Alkylgruppen bis zu dreifach substituiertes Phenyl oder für Tetrahydrofuryl steht.

Von den natürlichen Aminosäuren setzt man bevorzugt die folgenden ein: Glycin, Asparaginsäure, Glutaminsäure, Alanin, Valin, Leucin, Isoleucin, Tryptophan, Phenylalanin sowie daraus zugängliche Oligo- und Polymere wie Polyasparaginsäureimide und Polyglutaminsäureimide, besonders bevorzugt Glycin.

Als Polyamide setzt man üblicherweise solche ein, die erhältlich sind durch Polykondensation einer Dicarbonsäure mit 4 bis 6 C-Atomen und einem Diamin mit 4 bis 10 C-Atomen wie Tetramethylendiamin, Pentamethylendiamin, Hexamethylendiamin, Heptamethylendiamin, Octamethylendiamin, Nonamethylendiamin und Decamethylendiamin.

Bevorzugte Polyamide sind Polyamid-46, Polyamid-66 und Polyamid-610. Die Herstellung dieser Polyamide nimmt man im allgemeinen nach üblichen Methoden vor. Es versteht sich von selbst, daß diese Polyamide die üblichen Zusatz- und Hilfsstoffe enthalten können sowie daß diese Polyamide mit entsprechenden Reglern hergestellt werden

können.

Die Herstellung der Polyoxazoline IV erfolgt in der Regel nach dem in der DE-A 1,206,585 beschriebenen Verfahren.

Als Verbindungen, die definiert sind durch die Formeln IIIa oder IIIb, sind besonders bevorzugt zu nennen: 6-Aminohexansäure, Caprolactam, Laurinlactam sowie deren Oligomere und Polymere mit einem Molekulargewicht von nicht größer als 18000 g/mol.

Die Herstellung der biologisch abbaubaren Polyesteramide P2 erfolgt zweckmäßig analog zur Herstellung der Polyesteramide P1, wobei die Zugabe der Komponente B1 sowohl zu Anfang der Umsetzung als auch nach der Veresterungs- bzw. Umesterungsstufe erfolgen kann.

Die erfindungsgemäßen biologisch abbaubaren Polyetheresteramide Q1 sind charakterisiert durch ein Molekulargewicht ($M_n$) im Bereich von 5000 bis 80000, vorzugsweise von 6000 bis 50000, besonders bevorzugt von 8000 bis 40000 g/mol, durch eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramide Q1 bei einer Temperatur von 25°C), und einem Schmelzpunkt im Bereich von 50 bis 255, vorzugsweise von 60 bis 255°C.

Die Polyetheresteramide Q1 erhält man erfindungsgemäß, indem man eine Mischung zur Reaktion bringt, bestehend im wesentlichen aus

(c1) Polyetheresteramid P1,

(c2) 0,01 bis 50, vorzugsweise von 0,1 bis 40 Gew.-%, bezogen auf (c1), Komponente B1, und

(c3) 0 bis 5, vorzugsweise von 0 bis 4 mol-%, bezogen auf Komponente (a1) aus der Herstellung von P1, Verbindung D.

Die Umsetzung der Polyetheresteramide P1 mit der Komponente B1 gewünschtenfalls in Gegenwart der Verbindung D erfolgt vorzugsweise in der Schmelze bei Temperaturen im Bereich von 120 bis 260°C unter Inertgasatmosphäre, gewünschtenfalls auch unter vermindertem Druck. Man kann sowohl diskontinuierlich als auch kontinuierlich, beispielsweise in Rührkesseln oder (Reaktions-)Extrudern, arbeiten.

Die Umsetzung kann gewünschtenfalls durch Zugabe an sich bekannter Umesterungskatalysatoren (siehe die weiter oben bei der Herstellung der Polyetheresteramide P1 beschriebenen) beschleunigt werden.

Bei Verwendung von Komponenten B1 mit höheren Molekulargewichten, beispielsweise mit einem p von größer als 10 (zehn), können durch Umsetzung mit den Polyetheresteramiden P1 in Rührkesseln oder Extrudern, die gewünschten Blockstrukturen durch die Wahl der Reaktionsbedingungen wie Temperatur, Verweilzeit, Zusatz von Umesterungskatalysatoren wie den oben genannten erhalten werden. So ist aus J. of Appl. Polym. Sci., Vol. 32, S. 6191 bis 6207, John Wiley & Sons, 1986 sowie aus Makromol. Chemie, Vol. 136, S. 311 bis 313, 1970 bekannt, daß bei der Umsetzung in der Schmelze aus einem Blend durch Umesterungsreaktionen zunächst Blockcopolymere und dann statistische Copolymere erhalten werden können.

Die erfindungsgemäßen biologisch abbaubaren Polyetheresteramide Q2 sind charakterisiert durch ein Molekulargewicht ($M_n$) im Bereich von 6000 bis 80000, vorzugsweise von 8000 bis 50000, besonders bevorzugt von 10000 bis 40000 g/mol, durch eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polyetheresteramid Q2 bei einer Temperatur von 25°C), und einen Schmelzpunkt im Bereich von 50 bis 200°C, vorzugsweise von 60 bis 180°C.

Die Polyetheresteramide Q2 erhält man erfindungsgemäß, indem man eine Mischung zur Reaktion bringt, bestehend im wesentlichen aus

(d1) von 95 bis 99,9, vorzugsweise von 96 bis 99,8, besonders bevorzugt von 97 bis 99,65 Gew.-% Polyetheresteramid P1,

(d2) von 0,1 bis 5, vorzugsweise 0,2 bis 4, besonders bevorzugt von 0,35 bis 3 Gew.-% eines Diisocyanats C1 und

(d3) von 0 bis 5, vorzugsweise von 0 bis 4 mol-%, bezogen auf Komponente (a1) aus der Herstellung von P1, Verbindung D.

Als Diisocyanat C1 kann man nach bisherigen Beobachtungen alle üblichen und kommerziell erhältlichen Diisocyanate einsetzen. Bevorzugt setzt man ein Diisocyanat ein, das ausgewählt ist aus der Gruppe, bestehend aus Toluylen-2,4-diisocyanat, Toluylen-2,6-diisocyanat, 4,4'-, und 2,4'- Diphenylmethandiisocyanat, Naphthylen-1,5-diisocyanat, Xylylen-diisocyanat, Hexamethylendiisocyanat, Isophorondiisocyanat und Methylen-bis(4-isocyanatocyclohexan), besonders bevorzugt Hexamethylendiisocyanat.

Prinzipiell kann man auch trifunktionelle Isocyanat-Verbindungen, die Isocyanurat- und/oder Biuretgruppen mit einer Funktionalität nicht kleiner als drei enthalten können, einsetzen oder die Diisocyanat-Verbindungen C1 partiell durch Tri- oder Polyisocyanate ersetzen.

Die Umsetzung der Polyetheresteramide P1 mit dem Diisocyanat C1 erfolgt vorzugsweise in der Schmelze, wobei darauf zu achten ist, daß möglichst keine Nebenreaktionen auftreten, die zu einer Vernetzung oder Gelbildung führen können. In einer besonderen Ausführungsform führt man die Reaktion üblicherweise bei Temperaturen im Bereich von 130 bis 240, vorzugsweise von 140 bis 220°C durch, wobei die Zugabe des Diisocyanats vorteilhaft in mehreren Portionen oder kontinuierlich erfolgt.

Gewünschtenfalls kann man die Umsetzung des Polyetheresteramides P1 mit dem Diisocyanat C1 auch in Gegenwart von gängigen inerten Lösemitteln wie Toluol, Methylethylketon oder Dimethylformamid ("DMF") oder deren Mischungen durchführen, wobei man die Reaktionstemperatur in der Regel im Bereich von 80 bis 200, vorzugsweise von 90 bis 150°C wählt.

Die Umsetzung mit dem Diisocyanat C1 kann diskontinuierlich oder kontinuierlich beispielsweise in Rührkesseln, Reaktionsextrudern oder über Mischköpfe durchgeführt werden.

Man kann bei der Umsetzung der Polyetheresteramide P1 mit den Diisocyanaten C1 auch gängige Katalysatoren einsetzen, die aus dem Stand der Technik bekannt sind (beispielsweise die in der EP-A 534,295 beschriebenen) oder die bei der Herstellung von den Polyetheresteramiden P1 und Q1 einsetzbar sind bzw. eingesetzt wurden und, falls man bei der Herstellung von Polyetheresteramid Q2 so verfährt, daß man die Polyetheresteramide P1 nicht isoliert, nun weiterbenutzt werden können.

Beispielhaft seien genannt: tert. Amine wie Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titanverbindungen, Eisenverbindungen, Zinnverbindungen, z.B. Dibutoxydiacetoacetoxytitan, Tetrabutylorthotitanat, Zinndiacetat, -dioctoat, -dilaurat oder die Zinndialkylsalze aliphatischer Carbonsäuren wie Dibutylzinndiacetat, Dibutylzinndilaurat oder ähnliche, wobei wiederum darauf zu achten ist, daß möglichst keine toxischen Verbindungen eingesetzt werden sollten.

Obwohl das theoretische Optimum für die Reaktion von P1 mit Diisocyanaten C1 bei einem Molverhältnis der Isocyanat-Funktion zu P1-Endgruppe (bevorzugt sind Polyetheresteramide P1 mit überwiegend Hydroxy-Endgruppen) von 1:1 liegt, kann die Umsetzung ohne technische Probleme auch bei Molverhältnissen von 1:3 bis 1,5:1 durchgeführt werden. Bei Molverhältnissen von >1:1 kann gewünschtenfalls während der Umsetzung oder auch nach der Umsetzung die Zugabe eines Kettenverlängerungsmittels, ausgewählt aus den Komponenten (a2), bevorzugt ein $C_2$-$C_6$-Diol, erfolgen.

Die erfindungsgemäßen biologisch abbaubaren Polymere T1 sind charakterisiert durch ein Molekulargewicht ($M_n$) im Bereich von 8000 bis 80000, vorzugsweise von 8000 bis 50000, besonders vorzugsweise von 10000 bis 40000 g/mol, mit einer Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T1 bei einer Temperatur von 25°C) und einem Schmelzpunkt im Bereich von 50 bis 255, vorzugsweise von 60 bis 255°C.

Die biologisch abbaubaren Polymere T1 erhält man erfindungsgemäß, indem man ein Polyetheresteramid Q1 gemäß Anspruch 3 mit

(e1) 0,1 bis 5, vorzugsweise von 0,2 bis 4, besonders bevorzugt von 0,3 bis 3 Gew.-%, bezogen auf Polyetheresteramid Q1, Diisocyanat C1 sowie mit

(e2) 0 bis 5, vorzugsweise von 0 bis 4 mol-%, bezogen auf Komponente (a1) aus der Herstellung von P1 sowie Polyetheresteramid Q1, Verbindung D zur Reaktion bringt.

Auf diese Weise wird üblicherweise eine Kettenverlängerung erreicht, wobei die erhaltenen Polymerketten vorzugsweise eine Blockstruktur aufweisen.

Die Umsetzung erfolgt in der Regel analog zur Herstellung der Polyetheresteramide Q2.

Die erfindungsgemäßen biologisch abbaubaren Polymere T2 sind charakterisiert durch ein Molekulargewicht ($M_n$) im Bereich von 8000 bis 80000, vorzugsweise von 8000 bis 50000, besonders bevorzugt von 10000 bis 40000 g/mol, mit einer Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T2 bei einer Temperatur von 25°C) und einem Schmelzpunkt im Bereich von 50 bis 255, vorzugsweise von 60 bis 255°C.

Die biologisch abbaubaren Polymere T2 erhält man erfindungsgemäß durch Umsetzung des Polyetheresteramides Q2 mit

(f1) 0,01 bis 50, vorzugsweise von 0,1 bis 40 Gew.-%, bezogen auf das Polyetheresteramid Q2, der Komponente B1 sowie mit

(f2) 0 bis 5, vorzugsweise von 0 bis 4 mol-%, bezogen auf Komponente (a1) aus der Herstellung von Polyetheresteramid Q2 über das Polyetheresteramid PI, Verbindung D,

wobei man zweckmäßig analog zur Umsetzung von Polyetheresteramid P1 mit Komponente B1 zu Polyetheresteramid Q1 verfährt.

Die erfindungsgemäßen biologisch abbaubaren Polymere T3 sind charakterisiert durch ein Molekulargewicht ($M_n$) im Bereich von 8000 bis 80000, vorzugsweise von 8000 bis 50000, besonders bevorzugt von 10000 bis 40000 g/mol, eine Viskositätszahl im Bereich von 30 bis 450, vorzugsweise von 50 bis 400 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 255, vorzugsweise von 60 bis 255°C.

Die biologisch abbaubaren Polymere T3 erhält man erfindungsgemäß, indem man (g1) Polyetheresteramide P2, oder (g2) einer Mischung bestehend im wesentlichen aus Polyetheresteramid P1 und 0,01 bis 50, vorzugsweise von 0,1 bis 40 Gew.-%, bezogen auf das Polyetheresteramid P1, Komponente B1, oder (g3) einer Mischung, bestehend im wesentlichen aus Polyetheresteramiden PI, die eine unterschiedliche Zusammensetzung voneinander aufweisen, mit 0,1 bis 5, vorzugsweise von 0,2 bis 4, besonders bevorzugt von 0,3 bis 2,5 Gew.-%, bezogen auf die Menge der eingesetzten Polyetheresteramide, Diisocyanat C1 sowie mit 0 bis 5, vorzugsweise von 0 bis 4 mol-%, bezogen auf die jeweiligen Molmengen an Komponente (a1), die zur Herstellung der eingesetzten Polyetheresteramide (g1) bis (g3) eingesetzt wurden, Verbindung D, zur Reaktion bringt, wobei man die Umsetzungen zweckmäßig analog zur Herstellung der Polyetheresteramide Q2 aus den Polyetheresteramiden P1 und den Diisocyanaten C1 vornimmt.

In einer bevorzugten Ausführungsform setzt man Polyetheresteramide P2 ein, deren wiederkehrende Einheiten statistisch im Molekül verteilt sind.

Man kann jedoch auch Polyetheresteramide P2 einsetzen, deren Polymerketten Blockstrukturen aufweisen. Solche Polyetheresteramide P2 sind im allgemeinen zugänglich durch entsprechende Wahl, insbesondere des Molekulargewichts, der Komponente B1. So erfolgt nach bisherigen Beobachtungen im allgemeinen bei Verwendung einer hochmolekularen Komponente B1, insbesondere mit einem p von größer als 10, nur eine unvollständige Umesterung bzw. Umamidierung, beispielsweise auch in Gegenwart der oben beschriebenen Deaktivatoren (siehe J.of Appl. Polym. Sc. Vol. 32, S. 6191 bis 6207, John Wiley & Sons, 1986, und Makrom. Chemie, Vol. 136, S. 311 bis 313, 1970).

Gewünschtenfalls kann man die Umsetzung auch in Lösung mit den bei der Herstellung der Polymeren T1 aus den Polyetheresteramiden Q1 und den Diisocyanaten C1 genannten Lösungsmitteln durchführen.

Die biologisch abbaubaren thermoplastischen Formmassen T4 erhält man erfindungsgemäß, indem man in an sich bekannter Weise, bevorzugt unter Zusatz üblicher Additive wie Stabilisatoren, Verarbeitungshilfsmitteln, Füllstoffen (siehe J. of Appl. Polym. Sc., Vol. 32, S. 6191 bis 6207, John Wiley & Sons, 1986; WO 92/0441; EP 515,203; Kunststoff-Handbuch, Bd. 3/1, Carl Hanser Verlag München, 1992, S. 24 bis 28)

(h1) 99,5 bis 0,5 Gew.-% Polyetheresteramid PI gemäß Anspruch 1 oder Polyetheresteramid Q2 gemäß Anspruch 4 mit

(h2) 0,5 bis 99,5 Gew.-% Hydroxycarbonsäure H1 der allgemeinen Formel Va oder Vb

$$HO\text{-}[\text{-}C(O)\text{-}M\text{-}O\text{-}]_xH \qquad Va$$

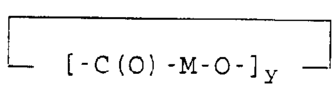

Vb

in der x eine ganze Zahl von 1 bis 1500, vorzugsweise von 1 bis 1000 und y 1, 2, 3 oder 4, vorzugsweise 1 und 2, bedeuten, und M für einen Rest steht, der ausgewählt ist aus der Gruppe bestehend aus Phenylen, $-(CH_2)_z-$, wobei z eine ganze Zahl von 1, 2, 3, 4 oder 5, vorzugsweise 1 und 5, bedeutet, $-C(R^2)H-$ und $-C(R^2)HCH_2$, wobei $R^2$ für Methyl oder Ethyl steht, mischt.

In einer bevorzugten Ausführungsform setzt man als Hydroxycarbonsäure H1 ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich).

In einer bevorzugten Ausführungsform setzt man hochmolekulare Hydroxycarbonsäuren H1 wie Polycaprolacton oder Polylactid oder Polyglykolid oder Polyhydroxyalkanoate wie Polyhydroxybuttersäure mit einem Molekulargewicht ($M_n$) im Bereich von 10000 bis 150000, vorzugsweise von 10000 bis 100000 g/mol ein.

Aus WO 92/0441 und EP-A 515,203 ist es bekannt, daß hochmolekulares Polylactid ohne Zusätze von Weichmachern für die meisten Anwendungen zu spröde ist. In einer bevorzugten Ausführungsform kann man ein Blend ausgehend von 0,5 bis 20, vorzugsweise von 0,5 bis 10 Gew.-% Polyetheresteramide P1 gemäß Anspruch 1 oder Polyetheresteramide Q2 gemäß Anspruch 4 und 99,5 bis 80, vorzugsweise von 99,5 bis 90 Gew.-% Polylactid herstellen, das eine deutliche Verbesserung der mechanischen Eigenschaften, beispielsweise eine Erhöhung der Schlagzähigkeit, gegenüber reinem Polylactid aufweist.

Eine weitere bevorzugte Ausführungsform betrifft ein Blend, erhältlich durch Mischen

von 99,5 bis 40, vorzugsweise von 99,5 bis 60 Gew.-% Polyetheresteramid P1 gemäß Anspruch 1 oder Polyetheresteramid Q2 gemäß Anspruch 4 und

von 0,5 bis 60, vorzugsweise von 0,5 bis 40 Gew.-% einer hochmolekularen Hydroxycarbonsäure H1, besonders bevorzugt Polylactid, Polyglycolid, 3-Polyhydroxybuttersäure und Polycaprolacton. Solche Blends können vollständig biologisch abgebaut werden und weisen nach den bisherigen Beobachtungen sehr gute mechanische Eigenschaften auf.

Nach bisherigen Beobachtungen erhält man die erfindungsgemäßen thermoplastischen Formmassen T4 bevorzugt dadurch, daß man kurze Mischzeiten einhält, beispielsweise bei einer Durchführung des Mischens in einem Extruder. Durch Wahl der Mischparameter, insbesondere der Mischzeit und gewünschtenfalls der Verwendung von Deaktivatoren, sind auch Formmassen zugänglich, die überwiegend Blendstrukturen aufweisen, d.h., daß der Mischvorgang so gesteuert werden kann, daß zumindest teilweise auch Umesterungsreaktionen stattfinden können.

In einer weiteren bevorzugten Ausführungsform kann man 0 bis 50, vorzugsweise 0 bis 30 Mol-% der Adipinsäure, oder ihrer esterbildende Derivate oder deren Mischungen, durch mindestens eine andere aliphatische $C_4$-$C_{10}$- oder cycloaliphatische $C_5$-$C_{10}$-Dicarbonsäure oder Dimerfettsäure wie Bernsteinsäure, Glutarsäure, Pimelinsäure, Korksäure, Azelainsäure oder Sebazinsäure oder ein Esterderivat wie deren Di-$C_1$-$C_6$-alkylester oder deren Anhydride wie Bernsteinsäureanhydrid, oder deren Mischungen, ersetzen, bevorzugt Bernsteinsäure, Bernsteinsäureanhydrid, Sebacinsäure, Dimerfettsäure und Di-$C_1$-$C_6$-alkylester wie Dimethyl-, Diethyl-, Di-n-Propyl-, Diisobutyl-, Di-n-pentyl-, Dineopentyl- Di-n-hexylester davon, insbesondere Dimethylbernsteinsäure.

Eine besonders bevorzugte Ausführungsform betrifft den Einsatz als Komponente (a1) die in der EP-A 7445 beschriebene Mischung aus Bernsteinsäure, Adipinsäure und Glutarsäure sowie deren $C_1$-$C_6$-Alkylester wie Dimethyl-, Diethyl-, Di-n-Propyl-, Diisobutyl-, Di-n-pentyl-, Dineopentyl- Di-n-hexyl-ester, insbesondere deren Dimethylester.

In einer weiteren bevorzugten Ausführungsform kann man O bis 50, vorzugsweise O bis 40 Mol-% der Terephthalsäure oder ihrer esterbildende Derivate, oder deren Mischungen durch mindestens eine andere aromatische Dicarbonsäure wie Isophthalsäure, Phthalsäure oder 2,6-Naphthalindicarbonsäure, bevorzugt Isophthalsäure, oder ein Esterderivat wie einen Di-$C_1$-$C_6$-alkylester wie Dimethyl-, Diethyl-, Di-n-Propyl-, Diisobutyl-, Di-n-pentyl-, Dineopentyl-Di-n-hexyl-ester, insbesondere einen Dimethylester, oder deren Mischungen, ersetzen.

Allgemein sei angemerkt, daß man die unterschiedlichen erfindungsgemäßen Polymere wie üblich aufarbeiten kann, indem man die Polymere isoliert, oder, insbesondere, wenn man die Polyetheresteramide P1, P2, Q1 und Q2 weiter umsetzen möchte, indem man die Polymere nicht isoliert, sondern gleich weiterverarbeitet. Die erfindungsgemäßen Polymere kann man durch Walzen, Streichen, Spritzen oder Gießen auf Beschichtungsunterlagen aufbringen. Bevorzugte Beschichtungsunterlagen sind solche, die kompostierbar sind oder verrotten wie Formkörper aus Papier, Cellulose oder Stärke.

Die erfindungsgemäßen Polymere können außerdem zur Herstellung von Formkörpern verwendet werden, die kompostierbar sind. Als Formkörper seien beispielhaft genannt: Wegwerfgegenstände wie Geschirr, Besteck, Müllsäkke, Folien für die Landwirtschaft zur Ernteverfrühung, Verpackungsfolien und Gefäße für die Anzucht von Pflanzen.

Des weiteren kann man die erfindungsgemäßen Polymere in an sich bekannter Weise zu Fäden verspinnen. Die Fäden kann man gewünschtenfalls nach üblichen Methoden verstrecken, streckzwirnen, streckspulen, streckschären, streckschlichten und strecktexturieren. Die Verstreckung zu sogenanntem Glattgarn kann dabei in ein und demselben Arbeitsgang (fully drawn yarn oder fully oriented yarn), oder in einem getrennten Arbeitsgang erfolgen. Das Streckschären, Streckschlichten und die Strecktexturierung führt man im allgemeinen in einem vom Spinnen getrennten Arbeitsgang durch. Die Fäden kann man in an sich bekannter Weise zu Fasern weiterverarbeiten. Aus den Fasern

sind dann Flächengebilde durch Weben, Wirken oder Stricken zugänglich.

Die oben beschriebenen Formkörper, Beschichtungsmittel und Fäden können gewünschtenfalls auch Füllstoffe enthalten, die man während des Polymerisationsvorganges in irgendeiner Stufe oder nachträglich, beispielsweise in eine Schmelze der erfindungsgemäßen Polymere einarbeiten kann.

Bezogen auf die erfindungsgemäßen Polymere kann von 0 bis 80 Gew.-% Füllstoffe zusetzen. Geeignete Füllstoffe sind beispielsweise Ruß, Stärke, Ligninpulver, Cellulosefasern, Naturfasern wie Sisal und Hanf, Eisenoxide, Tonmineralien, Erze, Calciumcarbonat, Calciumsulfat, Bariumsulfat und Titandioxid. Die Füllstoffe können zum Teil auch Stabilisatoren wie Tocopherol (Vitamin E), organische Phosphorverbindungen, Mono-, Di- und Polyphenole, Hydrochinone, Diarylamine, Thioether, UV-Stabilisatoren, Nukleierungsmittel wie Talkum sowie Gleit- und Formtrennmittel auf Basis von Kohlenwasserstoffen, Fettalkoholen, höheren Carbonsäuren, Metallsalzen höherer Carbonsäuren wie Calcium- und Zinkstearat, und Montanwachsen enthalten. Solche Stabilisatoren etc. sind in Kunststoff-Handbuch, Bd. 3/1, Carl Hanser Verlag, München, 1992, S. 24 bis 28 ausführlich beschrieben.

Die erfindungsgemäßen Polymere können außerdem durch den Zusatz von organischen oder anorganischen Farbstoffen beliebig eingefärbt werden. Die Farbstoffe können im weitesten Sinne auch als Füllstoff angesehen werden.

Ein besonderes Anwendungsgebiet der erfindungsgemäßen Polymere betrifft die Verwendung als kompostierbare Folie oder einer kompostierbaren Beschichtung als Außenlage von Windeln. Die Außenlage der Windeln verhindert wirksam den Durchtritt von Flüssigkeiten, die im Innern der Windel vom Fluff und Superabsorbern, bevorzugt von bioabbaubaren Superabsorbern, beispielsweise auf Basis von vernetzter Polyacrylsäure oder vernetztem Polyacrylamid, absorbiert werden. Als Innenlage der Windel kann man ein Faservlies aus einem Cellulosematerial verwenden. Die Außenlage der beschriebenen Windeln ist biologisch abbaubar und damit kompostierbar. Sie zerfällt beim Kompostieren, so daß die gesamte Windel verrottet, während mit einer Außenlage aus beispielsweise Polyethylen versehene Windeln nicht ohne vorherige Zerkleinerung oder aufwendige Abtrennung der Polyethylenfolie kompostiert werden können.

Eine weitere bevorzugte Verwendung der erfindungsgemäßen Polymere und Formmassen betrifft die Herstellung von Klebstoffen in an sich bekannter Weise (siehe beispielsweise Encycl. of Polym. Sc. and Eng. Vol.1, "Adhesive Compositions", S. 547 bis 577). Analog zur Lehre der EP-A 21042 kann man die erfindungsgemäßen Polymere und Formmassen auch mit geeigneten klebrigmachenden thermoplastischen Harzen, bevorzugt Naturharzen, nach dort beschriebenen Methoden verarbeiten.

Ein weiteres bevorzugtes Anwendungsgebiet betrifft die Herstellung vollständig abbaubarer Blends mit Stärkemischungen (bevorzugt mit thermoplastischer Stärke wie in der WO 90/05161 beschrieben) analog zu dem in der DE-A 42 37 535 beschriebenen Verfahren. Die erfindungsgemäßen Polymere und thermoplastischen Formmassen lassen sich nach bisherigen Beobachtungen auf Grund ihrer hydrophoben Natur, ihren mechanischen Eigenschaften, ihrer vollständigen Bioabbaubarkeit, ihrer guten Verträglichkeit mit thermoplastischer Stärke und nicht zuletzt wegen ihrer günstigen Rohstoffbasis vorteilhaft als synthetische Blendkomponente einsetzen.

Weitere Anwendungsgebiete betreffen beispielsweise die Verwendung der erfindungsgemäßen Polymere in landwirtschaftlichem Mulch, Verpackungsmaterial für Saatgut und Nährstoffe, Substrat in Klebefolien, Babyhöschen, Taschen, Bettücher, Flaschen, Kartons, Staubbeutel, Etiketten, Kissenbezüge, Schutzkleidung, Hygieneartikel, Taschentücher, Spielzeug und Wischer.

Eine weitere Verwendung der erfindungsgemäßen Polymere und Formmassen betrifft die Herstellung von Schäumen, wobei man im allgemeinen nach an sich bekannten Methoden vorgeht (siehe EP-A 372,846; Handbook of Polymeric foams and Foam Technology, Hanser Publisher, München, 1991, S. 375 bis 408). Üblicherweise wird dabei das erfindungsgemäße Polymere bzw. Formmasse zunächst aufgeschmolzen, gewünschtenfalls unter Zugabe von bis zu 5 Gew.-% Verbindung D, bevorzugt Pyromellitsäuredianhydrid und Trimellitsäureanhydrid, dann mit einem Treibmittel versetzt und die so erhaltene Mischung durch Extrusion vermindertem Druck ausgesetzt, wobei die Schäumung entsteht.

Die Vorteile der erfindungsgemäßen Polymere gegenüber bekannten bioabbaubaren Polymere liegen in einer günstigen Rohstoffbasis mit gut verfügbaren Ausgangsstoffen wie Adipinsäure, Terephthalsäure und gängigen Diolen, in interessanten mechanischen Eigenschaften durch Kombination von "harten" (durch die aromatischen Dicarbonsäuren wie beispielsweise Terephthalsäure) und "weichen" (durch die aliphatischen Dicarbonsäuren, wie beispielsweise Adipinsäure) Segmenten in der Polymerkette und der Variation der Anwendungen durch einfache Modifizierungen, in einem guten Abbauverhalten durch Mikroorganismen, besonders im Kompost und im Boden, und in einer gewissen Resistenz gegenüber Mikroorganismen in wäßrigen Systemen bei Raumtemperatur, was für viele Anwendungsbereiche besonders vorteilhaft ist. Durch den statistischen Einbau der aromatischen Dicarbonsäuren der Komponenten (a1) in verschiedenen Polymeren wird der biologische Angriff ermöglicht und damit die gewünschte biologische Abbaubarkeit erreicht.

Besonders vorteilhaft an den erfindungsgemäßen Polymere ist, daß durch maßgeschneiderte Rezepturen sowohl biologisches Abbauverhalten und mechanische Eigenschaften für den jeweiligen Anwendungszweck optimiert werden können.

Des weiteren können je nach Herstellverfahren vorteilhaft Polymere mit überwiegend statistisch verteilten Monomerbausteinen, Polymere mit überwiegend Blockstrukturen sowie Polymere mit überwiegend Blendstruktur oder Blends erhalten werden.

Beispiele

Abkürzungen

TTB: Titantetrabutylat
DMT: Dimethylterephthalat

Herstellung eines Polyesteramides $P1_a$

Vorprodukt $1_a$

4,672 kg 1,4-Butandiol, 7000 kg Adipinsäure und 50 g Zinn-dioctoat wurden unter Inertgas (Stickstoff) auf 230 bis 240°C aufgeheizt. Nachdem die Hauptmenge des bei der Umsetzung gebildeten Wassers abdestilliert war, wurden 10 g TTB zugesetzt. Wenn die Säurezahl SZ unter 1 war, wurde unter reduziertem Druck der Überschuß an Butandiol abdestilliert bis eine OH-Zahl von ca. 56 erreicht war.

$P1_a$

58,5 g DMT wurden mit 36,5 g Ethanolamin in einem Kessel unter Stickstoffatmosphäre mit langsamem Rühren auf 180°C erhitzt. Nach 30 min wurden unter Stickstoffatmosphäre noch 360 g des Vorproduktes, 175 g DMT, 1,3 g Pyromellitsäuredianhydrid, 300 g 1,4-Butandiol, 63,5 g Diethylenglykol und 1 g TTB zugesetzt. Dabei wurde das während der Umesterungsreaktion gebildete Methanol und Wasser abdestilliert. Innerhalb von 3 h wurde unter Erhöhung der Rührgeschwindigkeit auf 230°C erhitzt und nach 2 h wurden 0,4 g 50%ige wäßrige phosphorige Säure zugegeben. Innerhalb von 2 h wurde der Druck auf 5 mbar abgesenkt und bei 240°C noch 1 h unter 2mbar gehalten, wobei das im Überschuß eingesetzte 1,4-Butandiol abdestillierte. Es wurde ein elastisches, leicht bräunliches gefärbtes Produkt erhalten.

| | |
|---|---|
| OH-Zahl: | 6 mg KOH/g |
| SZ-Zahl: | unter 1 mg KOH/g |
| prim.Amin: | unter 0,1 g/100 g |

Mittels DSC-Messungen wurden zwei Schmelzpunkte bei 65°C und 83°C und eine Glasübergangstemperatur von -33°C für $P1_a$ bestimmt.

Herstellung eines Polyesteramides $Q1_a$

384 g 1,4-Butandiol, 6,1 g Ethanolamin, 316 g DMT und 1 g TTB wurden und unter Stickstoffatmosphäre bei langsamem Rühren auf 180°C erhitzt. Dabei wurde das während der Umesterungsreaktion gebildete Methanol abdestilliert. Nach Zugabe von 101,6 g Adipinsäure und 278 g Polyethylenglykol mit einem Molekulargewicht von 600 g/mol wurde unter Stickstoffatmosphäre innerhalb von 2 h unter Erhöhung der Rührgeschwindigkeit auf 230°C erhitzt und das bei der Kondensationsreaktion gebildete Wasser abdestilliert. Dann wurden 62,5 g eines nicht extrahierten monomerenhaltigen Polyamides mit einer Viskositätszahl von 85 und ca. 10,5 Gew.-% Restextrakt (z.B. Ultramid® B15 der Firma BASF) unter Stickstoffatmosphäre zugegeben. Nach 2 h wurden 0,4 g 50%ige wäßrige phosphorige Säure zugegeben, der Druck stufenweise auf 5 mbar abgesenkt und bei 230°C noch 1 h unter 2 mbar gehalten, wobei das während der Kondensationsreaktion gebildete Wasser und das im Überschuß eingesetzte 1,4-Butandiol abdestillierte.

| | |
|---|---|
| OH-Zahl: | 5 mg KOH/g |
| SZ-Zahl: | unter 1 mg KOH/g |

Aus DSC-Messungen wurden zwei Schmelzpunkte bei 126 und 216°C und eine Glasübergangstemperatur bei -44°C ermittelt.

Enzym-Test mit Rhizopus arrizus: $_{\Delta}$DOC: 87 mg/l /$_{\Delta}$DOC (PCL) : 2455.

Herstellung eines biologisch abbaubaren Polymeren $T1_a$

250 g des Vorproduktes $1_a$, 560 g DMT, 560 g 1,4-Butandiol, 12,2 g Ethanolamin, 622 kg eines Polyethylenglykol mit einem Molekulargewicht von 600 g/mol und 1 g TTB wurden bei langsamem Rühren auf 180°C erhitzt. Dabei wurde das während der Umesterungsreaktion gebildete Methanol abdestilliert. Innerhalb von 3 h wurde unter Erhöhung der Rührgeschwindigkeit auf 230°C erhitzt, 75 g eines extrahierten und getrockneten Polyamides mit einer Viskositätszahl von 85 und weniger als 0,4 Gew.-% Restextrakt (z.B. Ultramid® B15 der Firma BASF), 2,6 g Pyromellitsäuredianhydrid und nach 2 Stunden noch 0,8 g 50%ige wäßrige phosphorige Säure zugegeben. Innerhalb von 2 h wurde der Druck auf 5 mbar abgesenkt und bei 240°C noch 45 min bei unter 2 mbar gehalten, wobei das im Überschuß eingesetzte 1,4-Butandiol abdestillierte.

| | |
|---|---|
| OH-Zahl: | 13 mg KOH/g |
| Säurezahl: | 1,5 mg KOH/g |

Aus DSC-Messungen wurden zwei Schmelzpunkte bei 113 und 216°C und eine Glasübergangstemperatur von weniger als -42°C ermittelt.

300 g dieses Produktes wurden auf 180°C abgekühlt und 5,5 g Hexamethylendiisocyanat in 3 Portionen innerhalb von 30 min zugegeben. Der Molekulargewichtaufbau konnte anhand der deutlichen Erhöhung der Schmelzeviskosität festgestellt werden.

| | |
|---|---|
| OH-Zahl: | 4 mg KOH/g |
| Säurezahl: | 1,5 mg KOH/g. |

Meßmethoden

Enzym-Test

Die Polymere wurden in einer Mühle mit flüssigem Stickstoff oder Trockeneis gekühlt und fein gemahlen (je größer die Oberfläche des Mahlguts, desto schneller der enzymatische Abbau). Zur eigentlichen Durchführung des Enzym-Tests wurden 30 mg fein gemahlenes Polymerpulver und 2 ml einer 20 mmol wäßrigen $K_2HPO_4/KH_2PO_4$-Pufferlösung (PH-Wert: 7,0) in ein Eppendorfreagenzgefäß (2 ml) gegeben und 3 h bei 37°C auf einem Schwenker equilibriert Anschließend wurden 100 units Lipase aus entweder Rhizopus arrhizus, Rhizopus delemar oder Pseudomonas pl. zugesetzt und 16 h bei 37°C unter Rühren (250 rpm) auf dem Schwenker inkubiert. Danach wurde die Reaktionsmischung durch eine Millipore®-Membran (0,45 µm) filtriert und der DOC (dissolved organic carbon) des Filtrats gemessen. Analog dazu wurden je eine DOC-Messung nur mit Puffer und Enzym (als Enzymkontrolle) und eine nur mit Puffer und Probe (als Blindwert) durchgeführt.

Die ermittelten ΔDOC(Dissolved Organic Carbon)-Werte (DOC (Probe + Enzym) -DOC (Enzymkontrolle) -DOC (Blindwert)) können als Maß für die enzymatische Abbaubarkeit der Proben angesehen werden. Sie sind jeweils im Vergleich zu einer Messung mit Pulver von Polycaprolacton® Tone P 787 (Union Carbide) dargestellt. Bei der Bewertung ist darauf zu achten, daß es sich nicht um absolut quantifizierbare Daten handelt. Auf den Zusammenhang zwischen Oberfläche des Mahlguts und Schnelligkeit des enzymatischen Abbaus wurde weiter oben bereits hingewiesen. Des weiteren können auch die Enzymaktivitäten schwanken.

Die Bestimmungen der Hydroxyl-Zahl (OH-Zahl) und Säure-Zahl (SZ) erfolgten nach folgenden Methoden:

(a) Bestimmung der scheinbaren Hydroxyl-Zahl Zu ca. 1 bis 2 g exakt einqewogener Prüfsubßtanz wurden 10 ml Toluol und 9,8 ml Acetylierungsreagenz (s.u.) gegeben und 1 h bei 95°C unter Rühren erhitzt. Danach wurden 5 ml dest. Wasser zugeführt. Nach Abkühlen auf Raumtemperatur wurden 50 ml Tetrahydrofuran (THF) zugesetzt und mit ethanolischer KOH-Maßlösung gegen Wendepunkt potentiographisch titriert.

Der Versuch wurde ohne Prüfsubstanz wiederholt (Blindprobe).

Die scheinbare OH-Zahl wurde dann aufgrund folgender Formel ermittelt:

scheinb. OH-Zahl c.t.56,1.(V2-V1)/m (in mg KOH/g)

wobei

c = Stoffmengenkonzentration der ethanol. KOH-Maßlösung in mol/l,
t = Titer der ethanol. KOH-Maßlösung
m = Einwaage in mg der Prüfsubstanz
V1 = Verbrauch der Maßlösung mit Prüfsubstanz in ml
V2 = Verbrauch der Maßlösung ohne Prüfsubstanz in ml

bedeuten.

Verwendete Reagenzien:

ethanol. KOH-Maßlösung, c = 0,5 mol/l, Titer 0,9933 (Merck, Art.Nr. 1.09114)
Essigsäureanhydrid p.A. (Merck, Art.Nr. 42)
Pyridin p.A. (Riedel de Haen, Art.-Nr 33638)
Essigsäure p.A. (Merck, Art.Nr. 1.00063)

Acetylierungsreagenz: 810 ml Pyridin, 100 ml Essigsäureanhydrid und 9 ml Essigsäure

Wasser, deionisiert
THF und Toluol

(b) Bestimmung der Säurezahl (SZ)

Ca. 1 bis 1,5 g Prüfsubstanz wurden exakt eingewogen und mit 10 ml Toluol und 10 ml Pyridin versetzt und anschließend auf 95°C erhitzt. Nach dem Lösen wurde auf Raumtemperatur abgekühlt, 5 ml Wasser und 50 ml THF zugegeben und mit 0,1 N ethanol. KOHmaßlösung titriert.

Die Bestimmung wurde ohne Prüfsubstanz wiederholt (Blindprobe)

Die Säure-Zahl wurde dann aufgrund folgender Formel ermittelt:

$$SZ = c.t.56,1.(V1-V2)/m \text{ (in mg KOH/g)}$$

wobei

c = Stoffmengenkonzentration der ethanol. KOH-Maßlösung in mol/l,
t = Titer der ethanol. KOH-Maßlösung
m = Einwaage in mg der Prüfsubstanz
V1 = Verbrauch der Maßlösung mit Prüfsubstanz in ml
V2 = Verbrauch der Maßlösung ohne Prüfsubstanz in ml

bedeuten.

Verwendete Reagenzien:

ethanol. KOH-Maßlösung, c = 0,1 mol/l, Titer = 0,9913 (Merck, Art.Nr. 9115)
Pyridin p.A. (Riedel de Haen, Art.Nr. 33638)
Wasser, deionisiert
THF und Toluol

(c) Bestimmung der OH-Zahl

Die OH-Zahl ergibt sich aus der Summe der scheinbaren OH-Zahl und der SZ:

OH-Zahl = scheinb. OH-Zahl + SZ

Die Viskositätszahl (VZ) wurde in o-Dichlorbenzol/Phenol (Gew.-Verhältnis 50/50) bei einer Konzentration von 0,5 Gew.-% Polymer bei einer Temperatur von 25°C gemessen.

Die DSC-Messungen wurden mit einem DSC-Gerät 912+Thermal Analyzer 990 der Fa. DuPont durchgeführt. Die Temperatur- und Enthalpiekalibrierung erfolgte in üblicher Weise. Die Probeneinwaage betrug typischerweise 13 mg. Heiz- und Kühlraten betrugen 20 K/min. Die Proben wurden unter folgenden Bedingungen vermessen: 1. Aufheizender Lauf an Proben im Anlieferungszustand, 2. Schnelles Abkühlen aus der Schmelze, 3. Aufheizender Lauf an aus der Schmelze abgekühlten Proben (Proben aus 2). Die jeweils zweiten DSC-Läufe dienten dazu, nach Einprägen einer einheitlichen thermischen Vorgeschichte, einen Vergleich zwischen den verschiedenen Proben zu ermöglichen.

## Patentansprüche

1. Biologisch abbaubare Polyetheresteramide P1, erhältlich durch Reaktion einer Mischung, bestehend im wesentlichen aus

   (a1) einer Mischung, bestehend im wesentlichen aus 20 bis 95 mol-% Adipinsäure oder esterbildende Derivate davon oder Mischungen davon,

5 bis 80 mol-% Terephthalsäure oder esterbildende Derivate davon oder Mischungen davon, und

0 bis 5 mol-% einer sulfonatgruppenhaltigen Verbindung,

wobei die Summe der einzelnen Molprozentangaben 100 mol-% beträgt, und

(a2) einer Mischung aus Dihydroxyverbindungen, bestehend im wesentlichen aus

(a21) von 15 bis 99,3 mol-% einer Dihydroxyverbindung, ausgewählt aus der Gruppe bestehend aus $C_2$-$C_6$-Alkandiolen und $C_5$-$C_{10}$-Cycloalkandiolen,

(a22) von 0,2 bis 85 mol-% einer Etherfunktionenenthaltenden Dihydroxyverbindung gemäß Formel I

$$HO-[(CH_2)_n-O]_m-H \qquad I$$

in der n für 2, 3 oder 4 und m für eine ganze Zahl von 2 bis 250 stehen, oder Mischungen davon,

(a23) von 0,5 bis 80 mol-% eines Amino-$C_2$-$C_{12}$-alkanols oder eines Amino-$C_5$-$C_{10}$-cycloalkanols, und

(a24) von 0 bis 50 mol-% eines Diamino-$C_1$-$C_8$-Alkans,

(a25) von 0 bis 50 mol-% eines 2,2'-Bisoxazolins der allgemeinen Formel II

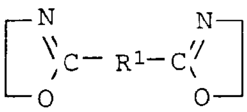

II

wobei $R^1$ eine Einfachbindung, eine $(CH_2)_q$-Alkylengruppe, mit q = 2, 3 oder 4, oder eine Phenylengruppe bedeutet, wobei die Summe der einzelnen Molprozentangaben 100 mol-% beträgt,
wobei man das Molverhältnis von (a1) zu (a2) im Bereich von 0,4:1 bis 1,5:1 wählt,

mit der Maßgabe, daß die Polyetheresteramide P1 ein Molekulargewicht ($M_n$) im Bereich von 5000 bis 80000 g/mol, eine Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid P1 bei einer Temperatur von 25°C) und einen Schmelzpunkt im Bereich von 50 bis 200°C aufweisen, und mit der weiteren Maßgabe, daß man von 0 bis 5 mol-%, bezogen auf die Molmenge der eingesetzten Komponente (a1), eine Verbindung D mit mindestens drei zur Esterbildung befähigten Gruppen zur Herstellung der Polyetheresteramide P1 einsetzt.

**2.** Biologisch abbaubare Polyetheresteramide P2, erhältlich durch Reaktion einer Mischung, bestehend im wesentlichen aus

(b1) einer Mischung, bestehend im wesentlichen aus

20 bis 95 mol-% Adipinsäure oder esterbildende Derivate davon oder Mischungen davon,

5 bis 80 mol-% Terephthalsäure oder esterbildende Derivate davon oder Mischungen davon, und

0 bis 5 mol-% einer sulfonatgruppenhaltigen Verbindung,

wobei die Summe der einzelnen Molprozentangaben 100 mol-% beträgt,

(b2) Mischung (a2),
wobei man das Molverhältnis von (b1) zu (b2) im Bereich von 0,4:1 bis 1,25:1 wählt,

(b3) von 0,01 bis 40 Gew.-%, bezogen auf Komponente (b1), einer Komponente B1, und

(b4) von 0 bis 5 mol-%, bezogen auf Komponente (b1), Verbindung D,
wobei die Komponente B1 ausgewählt ist, aus der Gruppe, bestehend aus Glycin, Asparaginsäure, Glutaminsäure, Alanin, Valin, Leucin, Isoleucin, Tryptophan, Phenylalanin sowie daraus zugängliche Oligo- und Polymere, Polyamiden mit einem Molekulargewicht von höchstens 18000 g/mol, erhältlich durch Polykondensation einer Dicarbonsäure mit 4 bis 6 C-Atomen und einem Diamin mit 4 bis 10 C-Atomen und Verbindungen, die definiert sind durch die Formeln IIIa und IIIb

$$HO\text{-}[\text{-}C(O)\text{-}G\text{-}N(H)\text{-}]_pH \qquad \text{IIIa}$$

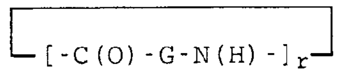

IIIb

in der p eine ganze Zahl von 1 bis 1500 und r eine ganze Zahl von 1 bis 4 bedeuten, und G für einen Rest steht, der ausgewählt ist aus der Gruppe bestehend aus Phenylen, $-(CH_2)_n-$, wobei n eine ganze Zahl von 1 bis 12 bedeutet, $-C(R^2)H-$ und $-C(R^2)HCH_2$, wobei $R^2$ für Methyl oder Ethyl steht,

sowie Polyoxazoline mit der wiederkehrenden Einheit IV

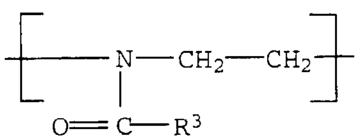

IV

in der $R^3$ für Wasserstoff, $C_1$-$C_6$-Alkyl, $C_5$-$C_8$-Cycloalkyl, unsubstituiertes oder mit $C_1$-$C_4$-Alkylgruppen bis zu dreifach substituiertes Phenyl oder für Tetrahydrofuryl steht,

wobei die Polyesteramide P2 ein Molekulargewicht ($M_n$) im Bereich von 5000 bis 80000 g/mol, eine Viskositätszahl im Bereich von 30 bis 450 g/ml (gemessen in o-Dichlorbenzol/ Phenol (Gew.-Verhältnis 50/50) bei einer Konzentration von 0,5 Gew.-% Polyesteramid P2 bei einer Temperatur von 25°C) und einen Schmelzpunkt im Bereich von 50 bis 255°C aufweisen.

**3.** Biologisch abbaubare Polyetheresteramide Q1 mit einem Molekulargewicht ($M_n$) im Bereich von 5000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramide Q1 bei einer Temperatur von 25°C), und einen Schmelzpunkt im Bereich von 50 bis 255°C, erhältlich durch Reaktion einer Mischung bestehend im wesentlichen aus

(c1) Polyetheresteramid P1,

(c2) 0,01 bis 50 Gew.-%, bezogen auf (c1), Komponente E1, und

(c3) 0 bis 5 mol-%, bezogen auf Komponente (a1) aus der Herstellung von P1, Verbindung D.

**4.** Biologisch abbaubare Polyetheresteramide Q2 mit einem Molekulargewicht ($M_n$) im Bereich von 6000 bis 80000 g/mol, einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polyetheresteramid Q2 bei einer Temperatur von 25°C), und einen Schmelzpunkt im Bereich von 50 bis 200°C, erhältlich durch Reaktion einer Mischung bestehend im wesentlichen

aus

(d1) von 95 bis 99,9 Gew.-% Polyetheresteramid P1,

(d2) von 0,1 bis 5 Gew.-% eines Diisocyanats C1 und

(d3) von 0 bis 5 mol-%, bezogen auf Komponente (a1) aus der Herstellung von P1, Verbindung D.

**5.** Biologisch abbaubare Polymere T1 mit einem Molekulargewicht ($M_n$) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T1 bei einer Temperatur von 25°C) und einem Schmelzpunkt im Bereich von 50 bis 255°C, erhältlich durch Umsetzung des Polyetheresteramids Q1 gemäß Anspruch 3 mit (e1) 0,1 bis 5 Gew.-%, bezogen auf Polyetheresteramid Q1, Diisocyanat C1 sowie mit (e2) 0 bis 5 mol-%, bezogen auf Komponente (a1) aus der Herstellung von Polyetheresteramid Q1 über Polyetheresteramid P1, Verbindung D.

**6.** Biologisch abbaubare Polymere T2 mit einem Molekulargewicht ($M_n$) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T2 bei einer Temperatur von 25°C) und einem Schmelzpunkt im Bereich von 50 bis 255°C, erhältlich durch Umsetzung des Polyetheresteramids Q2 mit

(f1) 0,01 bis 50 Gew.-%, bezogen auf Polyetheresteramid Q2, Komponente B1 sowie mit

(f2) 0 bis 5 mol-%, bezogen auf Komponente (a1) aus der Herstellung von Polyetheresteramid Q2 über Polyetheresteramid P1, Verbindung D.

**7.** Biologisch abbaubare Polymere T3 mit einem Molekulargewicht ($M_n$) im Bereich von 8000 bis 80000 g/mol, mit einer Viskositätszahl im Bereich von 30 bis 450 g/ml (gemessen in o-Dichlorbenzol/Phenol (Gew.-Verhältnis 50/50) bei einer Konzentration von 0,5 Gew.-% Polymer T3 bei einer Temperatur von 25°C) und einem Schmelzpunkt im Bereich von 50 bis 255°C, erhältlich durch Umsetzung von

(g1) Polyetheresteramid P2, oder

(g2) einer Mischung bestehend im wesentlichen aus Polyetheresteramid P1 und 0,01 bis 50 Gew.-%, bezogen auf Polyetheresteramid P1, Komponente B1, oder

(g3) einer Mischung bestehend im wesentlichen aus Polyetheresteramiden P1, die eine unterschiedliche Zusammensetzung voneinander aufweisen,

mit 0,1 bis 5 Gew.-%, bezogen auf die Menge der eingesetzten Polyetheresteramiden, Diisocyanat C1 sowie

mit 0 bis 5 mol-%, bezogen auf die jeweiligen Molmengen an Komponente (a1), die zur Herstellung der eingesetzten Polyetheresteramide (g1) bis (g3) eingesetzt wurden, Verbindung D.

**8.** Biologisch abbaubare thermoplastische Formmassen T4, erhältlich durch Mischen in an sich bekannter Weise von

(h1) 99,5 bis 0,5 Gew.-% Polyetheresteramid P1 gemäß Anspruch 1 oder Polyetheresteramid Q2 gemäß Anspruch 4 mit

(h2) 0,5 bis 99,5 Gew.-% einer Hydroxycarbonsäure H1 der allgemeinen Formel Va oder Vb

$$HO\text{-}[\text{-}C(O)\text{-}M\text{-}O\text{-}]_xH \qquad Va$$

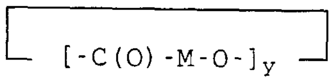

Vb

in der x eine ganze Zahl von 1 bis 1500 und y 1, 2, 3 oder 4, bedeuten, und M für einen Rest steht, der ausgewählt ist aus der Gruppe bestehend aus Phenylen, $-(CH_2)_z-$, wobei z eine ganze Zahl von 1, 2, 3, 4 oder 5 bedeutet, $-C(R^2)H-$ und $-C(R^2)HCH_2$, wobei $R^2$ für Methyl oder Ethyl steht, mischt.

**9.** Verfahren zur Herstellung der biologisch abbaubaren Polyetheresteramide P1 gemäß Anspruch 1 in an sich bekannter Weise, dadurch gekennzeichnet, daß man eine Mischung, bestehend im wesentlichen aus

(a1) einer Mischung, bestehend im wesentlichen aus

20 bis 95 mol-% Adipinsäure oder esterbildende Derivate davon oder Mischungen davon,

5 bis 80 mol-% Terephthalsäure oder esterbildende Derivate davon oder Mischungen davon, und

0 bis 5 mol-% einer sulfonatgruppenhaltigen Verbindung,

wobei die Summe der einzelnen Molprozentangaben 100 mol-% beträgt, und

(a2) einer Mischung aus Dihydroxyverbindungen, bestehend im wesentlichen aus

(a21) von 15 bis 99,3 mol-% einer Dihydroxyverbindung, ausgewählt aus der Gruppe bestehend aus $C_2$-$C_6$-Alkandiolen und $C_5$-$C_{10}$-Cycloalkandiolen,

(a22) von 0,2 bis 85 mol-% einer Etherfunktionen-enthaltenden Dihydroxyverbindung gemäß Formel I

$$HO-[(CH_2)_n-O]_m-H \qquad I$$

in der n für 2, 3 oder 4 und m für eine ganze Zahl von 2 bis 250 stehen, oder Mischungen davon,

(a23) von 0,5 bis 80 mol-% eines Amino-$C_2$-$C_{12}$-alkanols oder eines Amino-$C_5$-$C_{10}$-cycloalkanols, und

(a24) von 0 bis 50 mol-% eines Diamino-$C_1$-$C_8$-Alkans,

(a25) von 0 bis 50 mol-% eines 2,2'-Bisoxazolins der allgemeinen Formel II

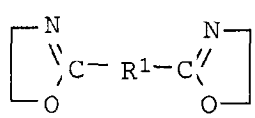

II

wobei $R^1$ eine Einfachbindung, eine $(CH_3)_q$-Alkylengruppe, mit q = 2, 3 oder 4, oder eine PHenylengruppe bedeutet, wobei die Summe der einzelnen Molprozentangaben 100 mol-% beträgt,

wobei man das Molverhältnis von (a1) zu (a2) im Bereich von 0,4:1 bis 1,5:1 wählt, und von 0 bis 5 mol-%, bezogen auf die Molmenge der eingesetzten Komponente (a1), eine Verbindung D zur Reaktion bringt.

**10.** Verfahren zur Herstellung der biologisch abbaubaren Polyetheresteramide P2 gemäß Anspruch 2 in an sich bekannter Weise, dadurch gekennzeichnet, daß man eine Mischung, bestehend im wesentlichen aus

(b1) einer Mischung, bestehend im wesentlichen aus

20 bis 95 mol-% Adipinsäure oder esterbildende Derivate davon oder Mischungen davon,

5 bis 80 mol-% Terephthalsäure oder esterbildende Derivate davon oder Mischungen davon, und

0 bis 5 mol-% einer sulfonatgruppenhaltigen Verbindung,

wobei die Summe der einzelnen Molprozentangaben 100 mol-% beträgt,

(b2) Mischung (a2),
wobei man das Molverhältnis von (b1) zu (b2) im Bereich von 0,4:1 bis 1,5:1 wählt,

(b3) von 0,01 bis 40 Gew.-%, bezogen auf Komponente (b1), einer Komponente B1, und

(b4) von 0 bis 5 mol-%, bezogen auf Komponente (b1), Verbindung D zur Reaktion bringt.

**11.** Verfahren zur Herstellung der biologisch abbaubaren Polyetheresteramide Q1 gemäß Anspruch 3 in an sich bekannter Weise, dadurch gekennzeichnet, daß man eine Mischung, bestehend im wesentlichen aus

(c1) Polyetheresteramid P1,

(c2) 0,01 bis 50 Gew.-%, bezogen auf (c1), Komponente B1, und

(c3) 0 bis 5 mol-%, bezogen auf Komponente (a1) aus der Herstellung von P1, Verbindung D,

zur Reaktion bringt.

**12.** Verfahren zur Herstellung der biologisch abbaubaren Polyetheresteramide Q2 gemäß Anspruch 4 in an sich bekannter Weise, dadurch gekennzeichnet, daß man eine Mischung, bestehend im wesentlichen aus

(d1) von 95 bis 99,9 Gew.-% Polyetheresteramid P1,

(d2) von 0,1 bis 5 Gew.-% eines Diisocyanats C1 und

(d3) von 0 bis 5 mol-%, bezogen auf Komponente (a1) aus der Herstellung von P1, Verbindung D

zur Reaktion bringt.

**13.** Verfahren zur Herstellung der biologisch abbaubaren Polymeren T1 gemäß Anspruch 5 in an sich bekannter Weise, dadurch gekennzeichnet, daß man Polyetheresteramid Q1 gemäß Anspruch 3 mit (e1) 0,1 bis 5 Gew.-%, bezogen auf den Polyetheresteramid Q1, Diisocyanat C1 sowie mit (e2) 0 bis 5 mol-%, bezogen auf Komponente (a1) aus der Herstellung von P1 sowie Polyetheresteramid Q1, Verbindung D zur Reaktion bringt.

**14.** Verfahren zur Herstellung der biologisch abbaubaren Polymeren T2 gemäß Anspruch 6 in an sich bekannter Weise, dadurch gekennzeichnet, daß man Polyetheresteramid Q2 mit

(f1) 0,01 bis 50 Gew.-%, bezogen auf Polyetheresteramid Q2, Komponente B1 sowie mit

(f2) 0 bis 5 mol-%, bezogen auf Komponente (a1) aus der Herstellung von Polyetheresteramid Q2 über P1, Verbindung D,

zur Reaktion bringt.

**15.** Verfahren zur Herstellung der biologisch abbaubaren Polymeren T3 gemäß Anspruch 7 in an sich bekannter Weise, dadurch gekennzeichnet, daß man

(g1) Polyetheresteramid P2, oder

(g2) eine Mischung, bestehend im wesentlichen aus Polyetheresteramid P1 und 0,01 bis 50 Gew.-%, bezogen auf Polyetheresteramid P1, Komponente B1, oder

(g3) eine Mischung, bestehend im wesentlichen aus Polyetheresteramiden P1, die eine unterschiedliche Zusammensetzung voneinander aufweisen,

mit 0,1 bis 5 Gew.-%, bezogen auf die Menge der eingesetzten Polyetheresteramide, Diisocyanat C1 sowie mit 0 bis 5 mol-%, bezogen auf die jeweiligen Molmengen an Komponente (a1), die zur Herstellung der eingesetzten Polyetheresteramide (g1) bis (g3) eingesetzt wurden, Verbindung D, zur Reaktion bringt.

**16.** Verfahren zur Herstellung der biologisch abbaubaren thermoplastischen Formmassen T4 gemäß Anspruch 8 in an sich bekannter Weise, dadurch gekennzeichnet, daß man

99,5 bis 0,5 Gew.-% Polyetheresteramid Pl gemäß Anspruch 1 oder Polyetheresteramid Q2 gemäß Anspruch 4 mit

0,5 bis 99,5 Gew.-% Hydroxycarbonsäure H1 mischt.

**17.** Verwendung der biologisch abbaubaren Polymere gemäß den Ansprüchen 1 bis 7 oder der thermoplastischen Formmassen gemäß Anspruch 8 oder hergestellt gemäß den Ansprüchen 9 bis 16 zur Herstellung von kompostierbaren Formkörpern.

**18.** Verwendung der biologisch abbaubaren Polymere gemäß den Ansprüchen 1 bis 7 oder der thermoplastischen Formmassen gemäß Anspruch 8 oder hergestellt gemäß den Ansprüchen 9 bis 16 zur Herstellung von Klebstoffen.

**19.** Kompostierbare Formkörper, erhältlich durch die Verwendung gemäß Anspruch 17.

**20.** Klebstoffe, erhältlich durch die Verwendung gemäß Anspruch 18.

**21.** Verwendung der biologisch abbaubaren Polymere gemäß den Ansprüchen 1 bis 7 oder der thermoplastischen Formmassen gemäß Anspruch 8 oder hergestellt gemäß den Ansprüchen 9 bis 16 zur Herstellung von biologisch abbaubaren Blends, enthaltend im wesentlichen die erfindungsgemäßen Polymere und Stärke.

**22.** Biologisch abbaubare Blends, erhältlich durch die Verwendung gemäß Anspruch 21.

**23.** Verfahren zur Herstellung biologisch abbaubarer Blends gemäß Anspruch 22 in an sich bekannter Weise, dadurch gekennzeichnet, daß man Stärke mit den erfindungsgemäßen Polymeren mischt.

**24.** Verwendung der biologisch abbaubaren Polymere gemäß den Ansprüchen 1 bis 7 oder der thermoplastischen Formmassen gemäß Anspruch 8 oder hergestellt gemäß den Ansprüchen 9 bis 16 zur Herstellung von biologisch abbaubaren Schäumen.

**25.** Biologisch abbaubare Schäume, erhältlich durch die Verwendung gemäß Anspruch 24.

**26.** Verwendung der biologisch abbaubaren Polymere gemäß den Ansprüchen 1 bis 7 oder der thermoplastischen Formmassen gemäß Anspruch 8 oder hergestellt gemäß den Ansprüchen 9 bis 16 zur Herstellung von Papierbeschichtungsmitteln.

**27.** Papierbeschichtungsmittel, erhältlich durch die Verwendung gemäß Anspruch 26.

## Claims

**1.** A biodegradable polyetheresteramide P1 obtainable by reacting a mixture consisting essentially of

(a1) a mixture consisting essentially of 20-95 mol% of adipic acid or ester-forming derivatives thereof or mixtures thereof,

5-80 mol% of terephthalic acid or ester-forming derivatives thereof or mixtures thereof, and

0-5 mol% of a compound containing sulfonate groups,

where the total of the individual mole percentages is 100 mol%, and

(a2) a mixture of dihydroxy compounds consisting essentially of

(a21) from 15 to 99.3 mol% of a dihydroxy compound selected from the group consisting of $C_2$-$C_6$-alkanediols and $C_5$-$C_{10}$-cycloalkanediols,

(a22) from 0.2 to 85 mol% of a dihydroxy compound containing ether functionalities of the formula I

$$HO\text{-}[(CH_2)_n\text{-}O]_m\text{-}H \quad \text{I}$$

where n is 2, 3 or 4 and m is an integer from 2 to 250, or mixtures thereof,

(a23) from 0.5 to 80 mol% of an amino-$C_2$-$C_{12}$-alkanol or amino-$C_5$-$C_{10}$-cycloalkanol, and

(a24) from 0 to 50 mol% of a diamino-$C_1$-$C_8$-alkane,

(a25) from 0 to 50 mol% of a 2,2'-bisoxazoline of the general formula II

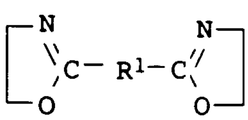 II

where $R^1$ is a single bond, a $(CH_2)_q$ alkylene group with q = 2, 3 or 4, or a phenylene group, where the total of the individual mole percentages is 100 mol%,
where the molar ratio of (a1) to (a2) is selected in the range from 0.4:1 to 1.5:1,

with the proviso that the polyetheresteramide P1 has a molecular weight ($M_n$) in the range from 5000 to 80,000 g/mol, a viscosity number in the range from 30 to 450 g/ml (measured in o-dichlorobenzene/phenol (50/50 ratio by weight) at a concentration of 0.5% by weight of polyether esteramide P1 at 25°C) and a melting point in the range from 50 to 200°C, and with the further proviso that from 0 to 5 mol%, based on the molar amount of component (a1) used, of a compound D with at least three groups capable of ester formation is used to prepare the polyether esteramides P1.

**2.** A biodegradable polyetheresteramide P2 obtainable by reacting a mixture consisting essentially of

(b1) a mixture consisting essentially of

20-95 mol% of adipic acid or ester-forming derivatives thereof or mixtures thereof,

5-80 mol% of terephthalic acid or ester-forming derivatives thereof or mixtures thereof, and

0-5 mol% of a compound containing sulfonate groups,

where the total of the individual mole percentages is 100 mol%,

(b2) mixture (a2),
where the molar ratio of (b1) to (b2) is selected in the range from 0.4:1 to 1.25:1,

(b3) from 0.01 to 40% by weight, based on component (b1), of a component B1, and

(b4) from 0 to 5 mol%, based on component (b1), of compound D,
where component B1 is selected from the group consisting of glycine, aspartic acid, glutamic acid, alanine, valine, leucine, isoleucine, tryptophan, phenylalanine and oligo- and polymers obtainable therefrom, polyamides with a molecular weight not exceeding 18,000 g/mol, obtainable by polycondensation of a dicarboxylic acid with 4 to 6 carbon atoms and a diamine with 4 to 10 carbon atoms and compounds which are defined by the formulae IIIa and IIIb

$$HO\text{-}[\text{-}C(O)\text{-}G\text{-}N(H)\text{-}]_pH \qquad \text{IIIa}$$

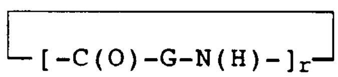

IIIb

where p is an integer from 1 to 1500 and r is an integer from 1 to 4, and G is a radical which is selected from the group consisting of phenylene, $-(CH_2)_n-$, where n is an integer from 1 to 12, $-C(R^2)H-$ and $-C(R^2)HCH_2$, where $R^2$ is methyl or ethyl,
and polyoxazolines with the repeating unit IV

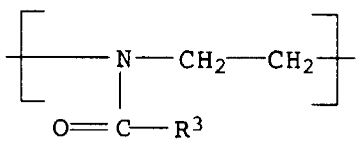

IV

where $R^3$ is hydrogen, $C_1$-$C_6$-alkyl, $C_5$-$C_8$-cycloalkyl, phenyl which is unsubstituted or substituted up to three times by $C_1$-$C_4$-alkyl groups, or tetrahydrofuryl,

where the polyetheresteramide P2 has a molecular weight ($M_n$) in the range from 5000 to 80,000 g/mol, a viscosity number in the range from 30 to 450 g/ml (measured in o-dichlorobenzene/phenol (50/50 ratio by weight) at a concentration of 0.5% by weight of polyetheresteramide P2 at 25°C) and a melting point in the range from 50 to 255°C.

**3.** A biodegradable polyetheresteramide Q1 with a molecular weight ($M_n$) in the range from 5000 to 80,000 g/mol, a viscosity number in the range from 30 to 450 g/ml (measured in o-dichlorobenzene/phenol (50/50 ratio by weight) at a concentration of 0.5% by weight of polyetheresteramide Q1 at 25°C) and a melting point in the range from 50 to 255°C, obtainable by reacting a mixture consisting essentially of

(c1) polyetheresteramide P1,

(c2) 0.01-50% by weight, based on (c1), of component B1, and

(c3) 0-5 mol%, based on component (a1) from the preparation of P1, of compound D.

**4.** A biodegradable polyetheresteramide Q2 with a molecular weight ($M_n$) in the range from 6000 to 80,000 g/mol, a viscosity number in the range from 30 to 450 g/ml (measured in o-dichlorobenzene/phenol (50/50 ratio by weight) at a concentration of 0.5% by weight of polyetheresteramide Q2 at 25°C) and a melting point in the range from 50 to 200°C, obtainable by reacting a mixture consisting essentially of

(d1) from 95 to 99.9% by weight of polyetheresteramide P1,

(d2) from 0.1 to 5% by weight of a diisocyanate C1 and

(d3) from 0 to 5 mol%, based on component (a1) from the preparation of P1, of compound D.

**5.** A biodegradable polymer T1 with a molecular weight ($M_n$) in the range from 8000 to 80,000 g/mol, with a viscosity number in the range from 30 to 450 g/ml (measured in o-dichlorobenzene/phenol (50/50 ratio by weight) at a concentration of 0.5% by weight of polymer T1 at 25°C) and a melting point in the range from 50 to 255°C, obtainable by reacting the polyetheresteramide Q1 as claimed in claim 3 with (e1) 0,1-5% by weight, based on polyetheresteramide Q1, of diisocyanate C1 and with (e2) 0-5 mol%, based on component (a1) from the preparation of polyetheresteramide Q1 via polyetheresteramide P1, of compound D.

**6.** A biodegradable polymer T2 with a molecular weight ($M_n$) in the range from 8000 to 80,000 g/mol, with a viscosity number in the range from 30 to 450 g/ml (measured in o-dichlorobenzene/phenol (50/50 ratio by weight) at a concentration of 0.5% by weight of polymer T2 at 25°C) and a melting point in the range from 50 to 255°C, obtainable by reacting the polyetheresteramide Q2 with

(f1) 0.01-50% by weight, based on polyetheresteramide Q2, of component B1 and with

(f2) 0-5 mol%, based on component (a1) from the preparation of polyetheresteramide Q2 via polyetheresteramide P1, of compound D.

**7.** A biodegradable polymer T3 with a molecular weight ($M_n$) in the range from 8000 to 80,000 g/mol, with a viscosity number in the range from 30 to 450 g/ml (measured in o-dichlorobenzene/phenol (50/50 ratio by weight) at a concentration of 0.5% by weight of polymer T3 at 25°C) and a melting point in the range from 50 to 255°C, obtainable by reacting

(g1) polyetheresteramide P2, or

(g2) a mixture consisting essentially of polyetheresteramide P1 and 0.01-50% by weight, based on polyetheresteramide P1, of component B1, or

(g3) a mixture consisting essentially of polyetheresteramides P1 which differ from one another in composition,

with 0.1-5% by weight, based on the amount of the polyetheresteramides used, of diisocyanate C1 and with 0-5 mol%, based on the particular molar amounts of component (a1) used to prepare the polyetheresteramides (g1) to (g3) used, of compound D.

**8.** A biodegradable thermoplastic molding composition T4 obtainable by mixing in a conventional way

(h1) 99.5-0.5% by weight of polyetheresteramide P1 as claimed in claim 1 or polyetheresteramide Q2 as claimed in claim 4 with

(h2) 0.5-99.5% by weight of a hydroxy carboxylic acid H1 of the general formula Va or Vb

$$HO\text{-}[\text{-}C(O)\text{-}M\text{-}O\text{-}]_xH \qquad Va$$

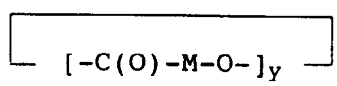

Vb

where x is an integer from 1 to 1500 and y is 1, 2, 3 or 4 and M is a radical selected from the group consisting of phenylene, $-(CH_2)_z-$, where z is an integer of 1, 2, 3, 4 or 5, $-C(R^2)H-$ and $-C(R^2)HCH_2$, where $R^2$ is methyl or ethyl.

**9.** A process for preparing the biodegradable polyetheresteramides P1 as claimed in claim 1 in a conventional way, which comprises reacting a mixture consisting essentially of

(a1) a mixture consisting essentially of

20-95 mol% of adipic acid or ester-forming derivatives thereof or mixtures thereof,

5-80 mol% of terephthalic acid or ester-forming derivatives thereof or mixtures thereof, and

0-5 mol% of a compound containing sulfonate groups,

where the total of the individual mole percentages is 100 mol%, and

(a2) a mixture of dihydroxy compounds consisting essentially of

(a21) from 15 to 99.3 mol% of a dihydroxy compound selected from the group consisting of $C_2$-$C_6$-alkanediols and $C_5$-$C_{10}$-cycloalkanediols,

(a22) from 0.2 to 85 mol% of a dihydroxy compound containing ether functionalities of the formula I

$$HO\text{-}[(CH_2)_n\text{-}O]_m\text{-}H \qquad I$$

where n is 2, 3 or 4 and m is an integer from 2 to 250, or mixtures thereof,

(a23) from 0.5 to 80 mol% of an amino-$C_2$-$C_{12}$-alkanol or amino-$C_5$-$C_{10}$-cycloalkanol, and

(a24) from 0 to 50 mol% of a diamino-$C_1$-$C_8$-alkane,

(a25) from 0 to 50 mol% of a 2,2'-bisoxazoline of the general formula II

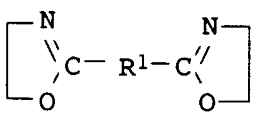

II

where $R^1$ is a single bond, a $(CH_3)_q$ alkylene group with q = 2, 3 or 4, or a phenylene group, where the total of the individual mole percentages is 100 mol%,

where the molar ratio of (a1) to (a2) is selected in the range from 0.4:1 to 1.5:1, and from 0 to 5 mol%, based on the molar amount of component (a1) used, of a compound D.

**10.** A process for preparing the biodegradable polyetheresteramides P2 as claimed in claim 2 in a conventional way, which comprises reacting a mixture consisting essentially of

(b1) a mixture consisting essentially of

20-95 mol% of adipic acid or ester-forming derivatives thereof or mixtures thereof,

5-80 mol% of terephthalic acid or ester-forming derivatives thereof or mixtures thereof, and

0-5 mol% of a compound containing sulfonate groups,

where the total of the individual mole percentages is 100 mol%,

(b2) mixture (a2),

where the molar ratio of (b1) to (b2) is selected in the range from 0.4:1 to 1.25:1,

(b3) from 0.01 to 40% by weight, based on component (b1), of a component B1, and

(b4) from 0 to 5 mol%, based on component (b1), of compound D.

**11.** A process for preparing the biodegradable polyetheresteramides Q1 as claimed in claim 3 in a conventional way, which comprises reacting a mixture consisting essentially of

(c1) polyetheresteramide P1,

(c2) 0.01-50% by weight, based on (c1), of component B1, and

(c3) 0-5 mol%, based on component (a1) from the preparation of P1, of compound D.

**12.** A process for preparing the biodegradable polyetheresteramides Q2 as claimed in claim 4 in a conventional way, which comprises reacting a mixture consisting essentially of

(d1) from 95 to 99.9% by weight of polyetheresteramide P1,

(d2) from 0.1 to 5% by weight of a diisocyanate C1 and

(d3) from 0 to 5 mol%, based on component (a1) from the preparation of P1, of compound D.

**13.** A process for preparing the biodegradable polymers T1 as claimed in claim 5 in a conventional way, which comprises reacting polyetheresteramide Q1 as claimed in claim 3 with (e1) 0.1-5% by weight, based on the polyetheresteramide Q1, of diisocyanate CI and with (e2) 0-5 mol%, based on component (a1) from the preparation of P1 and polyetheresteramide Q1, of compound D.

**14.** A process for preparing the biodegradable polymers T2 as claimed in claim 6 in a conventional way, which comprises reacting polyetheresteramide Q2 with

(f1) 0.01-50% by weight, based on polyetheresteramide Q2, of component B1 and with

(f2) 0-5 mol%, based on component (a1) from the preparation of polyetheresteramide Q2 via P1, of compound D.

**15.** A process for preparing the biodegradable polymers T3 as claimed in claim 7 in a conventional way, which comprises reacting

(g1) polyetheresteramide P2, or

(g2) a mixture consisting essentially of polyetheresteramide P1 and 0.01-50% by weight, based on polyetheresteramide P1, of component B1, or

(g3) a mixture consisting essentially of polyetheresteramides P1 which differ from one another in composition,

with 0,1-5% by weight, based on the amount of the polyetheresteramides used, of diisocyanate C1 and
with 0-5 mol%, based on the particular molar amounts of component (a1) used to prepare the polyetheresteramides (g1) to (g3) used, of compound D.

**16.** A process for preparing the biodegradable thermoplastic molding compositions T4 as claimed in claim 8 in a conventional way, which comprises mixing

99.5-0.5% by weight of polyetheresteramide P1 as claimed in claim 1 or polyetheresteramide Q2 as claimed in claim 4 with

0.5-99.5% by weight of hydroxy carboxylic acid H1.

17. The use of the biodegradable polymers as claimed in claims 1 to 7 or of the thermoplastic molding compositions as claimed in claim 8 or prepared as claimed in claims 9 to 16 for producing compostable moldings.

18. The use of the biodegradable polymers as claimed in claims 1 to 7 or of the thermoplastic molding compositions as claimed in claim 8 or prepared as claimed in claims 9 to 16 for producing adhesives.

19. Compostable moldings obtainable by the use as claimed in claim 17.

20. Adhesives obtainable by the use as claimed in claim 18.

21. The use of the biodegradable polymers as claimed in claims 1 to 7 or of the thermoplastic molding compositions as claimed in claim 8 or prepared as claimed in claims 9 to 16 for producing biodegradable blends essentially comprising the polymers according to the invention and starch.

22. A biodegradable blend obtainable by the use as claimed in claim 21.

23. The process for producing biodegradable blends as claimed in claim 22 in a conventional way, which comprises mixing starch with the polymers according to the invention.

24. The use of the biodegradable polymers as claimed in claims 1 to 7 or of the thermoplastic molding compositions as claimed in claim 8 or prepared as claimed in claims 9 to 16 for producing biodegradable foams.

25. A biodegradable foam obtainable by the use as claimed in claim 24.

26. The use of the biodegradable polymers as claimed in claims 1 to 7 or of the thermoplastic molding compositions as claimed in claim 8 or prepared as claimed in claims 9 to 16 for producing paper coating compositions.

27. A paper coating composition obtainable by the use as claimed in claim 26.

## Revendications

1. Polyétheresteramides biologiquement dégradables P1, que l'on peut obtenir par la réaction d'un mélange, qui se compose essentiellement

(a1) d'un mélange qui se compose essentiellement

de 20 à 95% molaires d'acide adipique ou de dérivés estérogènes de celui-ci ou de leurs mélanges,
de 5 à 80% molaires d'acide téréphtalique ou de dérivés estérogènes de celui-ci ou de leurs mélanges, et
de 0 à 5% molaires d'un composé contenant des radicaux sulfonate,
où la somme des indications en pourcentages molaires individuelles totalise 100% molaires, et

(a2) d'un mélange de composés dihydroxylés, qui se compose essentiellement de
(a21) de 15 à 99,3% molaires d'un composé dihydroxylé, choisi dans le groupe constitué d'alcanediols en $C_2$ à $C_6$ et de cycloalcanediols en $C_5$ à $C_{10}$,
(a22) de 0,2 à 85% molaires d'un composé dihydroxylé contenant des fonctions éther, répondant à la formule I :

$$HO-[(CH_2)_n-O]_m-H \qquad (I)$$

dans laquelle n est égal à 2, 3 ou 4 et m représente un nombre entier dont la valeur varie de 2 à 250, ou de mélanges de celui-ci,
(a23) de 0,5 à 80% molaires d'un aminoalcanol en $C_2$ à $C_{12}$ ou d'un aminocycloalcanol en $C_5$ à $C_{10}$, et
(a24) de 0 à 50% molaires d'un diaminoalcane en $C_1$ à $C_8$,
(a25) de 0 à 50% molaires d'une 2,2'-bisoxazoline de la formule générale II :

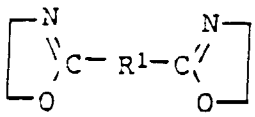

(II)

dans laquelle $R^1$ représente une simple liaison, un groupe $(CH_2)_q$-alkylène, dans lequel q est égal à 2, 3 ou 4, ou un groupe phénylène, où la somme des indications en pourcentages molaires individuelles totalise 100% molaires, où le rapport molaire de (a1) à (a2) est choisi dans la plage de 0,4:1 à 1,5:1,

avec la condition que les polyétheresteramides P1 présentent un poids moléculaire ($M_n$) qui varie de 5000 à 80000 g/mole, un indice de viscosité qui varie de 30 à 450 g/ml (mesuré dans un mélange de o-dichlorobenzène et de phénol (rapport pondéral 50/50) à la concentration de 0,5% en poids de polyétheresteramide P1 et à la température de 25°C) et un point de fusion qui varie de 50 à 200°C et avec la condition supplémentaire que l'on mette en oeuvre, en vue de la préparation des polyétheresteramides P1, de 0 à 5% molaires, par rapport à la quantité molaire du composant (a1) utilisée, d'un composé D comportant au moins trois radicaux estérogènes.

**2.** Polyétheresteramides biologiquement dégradables P2, que l'on peut obtenir par la réaction d'un mélange, qui se compose essentiellement

(b1) d'un mélange, qui se compose essentiellement

de 20 à 95% molaires d'acide adipique ou de dérivés estérogènes de celui-ci, ou de leurs mélanges,
de 5 à 80% molaires d'acide téréphtalique ou de dérivés estérogènes de celui-ci, ou de leurs mélanges, et
de 0 à 5% molaires d'un composé contenant des radicaux sulfonate,
où la somme des indications en pourcentages molaires individuelles totalise 100% molaires,

(b2) d'un mélange (a2),
où le rapport molaire de (b1) à (b2) est choisi dans la plage de 0,4:1 à 1,25:1,
(b3) de 0,01 à 40% en poids, par rapport au composant (b1), d'un composant B1, et
(b4) de 0 à 5% molaires, par rapport au composant (b1), d'un composé D,
où on choisit le composant B1 dans le groupe constitué de la glycine, de l'acide aspartique, de l'acide glutamique, de l'alanine, de la valine, de la leucine, de l'isoleucine, du tryptophane, de la phénylalanine, ainsi que des oligomères et des polymères qui en sont accessibles, de polyamides d'un poids moléculaire d'au maximum 18000 g/mole, que l'on peut obtenir par la polycondensation d'un acide dicarboxylique comportant de 4 à 6 atomes de carbone et d'une diamine comportant de 4 à 10 atomes de carbone et de composés qui sont définis par les formules IIIa et IIIb :

$$HO\text{-}[\text{-}C(O)\text{-}G\text{-}N(H)\text{-}]_pH \qquad \text{IIIa}$$

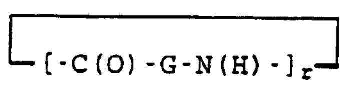

**IIIb**

dans lesquelles p représente un nombre entier dont la valeur varie de 1 à 1500 et r représente un nombre entier dont la valeur varie de 1 à 4, et G représente un reste choisi dans le groupe formé par les radicaux phénylène, $-(CH_2)_n-$, où n représente un nombre entier dont la valeur varie de 1 à 12, $-C(R^2)H-$ et $-C(R^2)HCH_2$, où $R^2$ représente le radical méthyle ou éthyle,
ainsi que des polyoxazolines comportant l'unité récurrente IV :

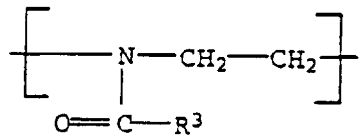

(IV)

dans laquelle $R^3$ représente un atome d'hydrogène, un radical alkyle en $C_1$ à $C_6$, un radical cycloalkyle en $C_5$ à $C_8$, un radical phényle non substitué ou substitué jusqu'à trois fois par des radicaux alkyle en $C_1$ à $C_4$, ou le radical tétrahydrofuryle,

où les polyesteramides P2 présentent un poids moléculaire ($M_n$) qui varie de 5000 à 80000 g/mole, un indice de viscosité qui varie de 30 à 450 g/ml (mesuré dans un mélange de o-dichlorobenzène et de phénol (rapport pondéral 50/50) à la concentration de 0,5% en poids de polyesteramide P2 et à la température de 25°C) et un point de fusion qui varie de 50 à 255°C.

**3.** Polyétheresteramides biologiquement dégradables Q1, d'un poids moléculaire ($M_n$) qui varie de 5000 à 80000 g/mole, d'un indice de viscosité qui varie de 30 à 450 g/ml (mesuré dans un mélange de o-dichlorobenzène et de phénol) rapport pondéral 50/50) à la concentration de 0,5% en poids de polyétheresteramides Q1 et à la température de 25°C), et un point de fusion qui varie de 50 à 255°C, que l'on peut obtenir par la réaction d'un mélange essentiellement constitué

(c1) d'un polyétheresteramide P1,
(c2) de 0,01 à 50% en poids, par rapport à (c1), d'un composant B1,
et
(c3) de 0 à 5% molaires, par rapport au composant (a1) de la préparation de P1, d'un composé D.

**4.** Polyétheresteramides biologiquement dégradables Q2 d'un poids moléculaire ($M_n$) qui varie de 6000 à 80000 g/mole, d'un indice de viscosité qui varie de 30 à 450 g/ml (mésuré dans un mélange de o-dichlorobenzène et de phénol (rapport pondéral 50/50) à la concentration de 0,5% en poids de polyétheresteramide Q2 et à la température de 25°C), et un point de fusion qui varie de 50 à 200°C, que l'on peut obtenir par la réaction d'un mélange qui se compose essentiellement

(d1) de 95 à 99,9% en poids de polyétheresteramide P1,
(d2) de 0,1 à 5% en poids d'un diisocyanate C1, et
(d3) de 0 à 5% molaires, par rapport au composant (a1) de la préparation de P1, d'un composé D.

**5.** Polymères biologiquement dégradables T1 d'un poids moléculaire ($M_n$) qui varie de 8000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polymère T1 et à la température de 25°C) et un point de fusion qui varie de 50 à 255°C, que l'on peut obtenir par la réaction du polyétheresteramide Q1 suivant la revendication 3 avec

(e1) de 0,1 à 5% en poids, par rapport au polyétheresteramide Q1 d'un diisocyanate C1, ainsi qu'avec
(e2) de 0 à 5% molaires, par rapport au composant (a1) de la préparation du polyétheresteramide Q1 en passant par le polyétheresteramide P1, d'un composé D.

**6.** Polymères biologiquement dégradables T2 d'un poids moléculaire ($M_n$) qui varie de 8000 à 80000 g/mole, d'un indice de viscosité qui varie de 30 à 450 g/ml (mesuré dans un mélange de o-dichlorobenzène et de phénol (rapport pondéral 50/50) à la concentration de 0,5% en poids de polymère T2 et à la température de 25°C) et un point de fusion qui varie de 50 à 255°C, que l'on peut obtenir par la réaction du polyétheresteramide Q2 avec

(f1) de 0,01 à 50% en poids, par rapport au polyétheresteramide Q2, d'un composant B1, ainsi qu'avec
(f2) de 0 à 5% molaires, par rapport au composant (a1) de la préparation du polyétheresteramide Q2 en passant par le polyétheresteramide P1, d'un composé D.

**7.** Polymères biologiquement dégradables T3 d'un poids moléculaire ($M_n$) qui varie de 8000 à 80000 g/mole, d'un

indice de viscosité qui varie de 30 à 450 g/ml (mesuré dans un mélange de o-dichlorobenzène et de phénol (rapport pondéral 50/50) à la concentration de 0,5% en poids de polymère T3 et à la température de 25°C) et un point de fusion qui varie de 50 à 255°C, que l'on peut obtenir par la réaction de

(g1) un polyétheresteramide P2, ou
(g2) d'un mélange constitué essentiellement de polyétheresteramide P1 et de 0,01 à 50% en poids, par rapport au polyétheresteramide P1, d'un composant B1, ou
(g3) d'un mélange essentiellement constitué de polyétheresteramides P1, qui présente une composition mutuellement différente,

avec de 0,1 à 5% en poids, par rapport à la quantité des polyétheresteramides mis en oeuvre, d'un diisocyanate C1, ainsi qu'avec
de 0 à 5% molaires, par rapport aux quantités molaires concernées de composant (a1), qui furent mises en oeuvre pour la préparation des polyétheresteramides (g1) à (g3) utilisés, d'un composé D.

**8.** Masses à mouler thermoplastiques biologiquement dégradables T4, que l'on peut obtenir par le mélange de manière en soi connue

(h1) de 99,5 à 0,5% en poids de polyétheresteramide P1 suivant la revendication 1 ou de polyétheresteramide Q2 suivant la revendication 4
avec
(h2) de 0,5 à 99,5% en poids d'un acide hydroxycarboxylique H1 des formules générales Va ou Vb :

$$HO\text{-}[\text{-}C(O)\text{-}M\text{-}O\text{-}]_xH \qquad Va$$

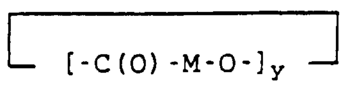

Vb

dans lesquelles x représente un nombre entier dont la valeur varie de 1 à 1500 et y est égal à 1, 2, 3 ou 4, et M représente un reste qui est choisi dans le groupe formé par les radicaux phénylène, $-(CH_2)_z-$, où z représente un nombre entier égal à 1, 2, 3, 4 ou 5, $-C(R^2)H-$ et $-C(R^2)HCH_2$, où $R^2$ représente le radical méthyle ou éthyle.

**9.** Procédé de préparation des polyétheresteramides biologiquement dégradables P1 suivant la revendication 1, de manière en soi connue, caractérisé en ce que l'on fait réagir un mélange qui se compose essentiellement,

(a1) d'un mélange qui se compose essentiellement

de 20 à 95% molaires d'acide adipique ou de dérivés estérogènes de celui-ci ou de leurs mélanges,
de 5 à 80% molaires d'acide téréphtalique ou de dérivés estérogènes de celui-ci ou de leurs mélanges, et
de 0 à 5% molaires d'un composé contenant des radicaux sulfonate,
où la somme des indications en pourcentages molaires individuelles totalise 100% molaires, et

(a2) d'un mélange de composés dihydroxylés, qui se compose essentiellement de
(a21) de 15 à 99,3% molaires d'un composé dihydroxylé, choisi dans le groupe constitué d'alcanediols en $C_2$ à $C_6$ et de cycloalcanediols en $C_5$ à $C_{10}$,
(a22) de 0,2 à 85% molaires d'un composé dihydroxylé contenant des fonctions éther, répondant à la formule I :

$$HO\text{-}[(CH_2)_n\text{-}O]_m\text{-}H \qquad (I)$$

dans laquelle n est égal à 2, 3 ou 4 et m représente un nombre entier dont la valeur varie de 2 à 250, ou de

leurs mélanges,
(a23) de 0,5 à 80% molaires d'un aminoalcanol en $C_2$ à $C_{12}$ ou d'un aminocycloalcanol en $C_5$ à $C_{10}$, et
(a24) de 0 à 50% molaires d'un diaminoalcane en $C_1$ à $C_8$,
(a25) de 0 à 50% molaires d'une 2,2'-bisoxazoline de la formule générale II :

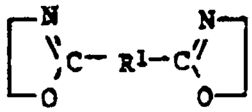

(II)

dans laquelle $R^1$ représente une simple liaison, un radical $(CH_2)_q$-alkylène, dans lequel q est égal à 2, 3 ou 4, ou un radical phénylène, où la somme des indications en pourcentages molaires individuelles totalise 100% molaires,

où on choisit le rapport molaire de (a1) à (a2) dans la plage de 0,4:1 à 1,5:1, et de 0 à 5% molaires, par rapport à la quantité molaire du composant (a1) mis en oeuvre, d'un composé D.

**10.** Procédé de préparation de polyétheresteramides biologiquement dégradables P2 suivant la revendication 2, d'une manière en soi connue, caractérisé en ce que l'on fait réagir un mélange essentiellement constitué

(b1) d'un mélange, qui se compose essentiellement

de 20 à 95% molaires d'acide adipique ou de dérivés estérogènes de celui-ci, ou de leurs mélanges,
de 5 à 80% molaires d'acide téréphtalique ou de dérivés estérogènes de celui-ci, ou de leurs mélanges, et
de 0 à 5% molaires d'un composé contenant des radicaux sulfonate,
où la somme des indications en pourcentages molaires individuelles totalise 100% molaires,

(b2) d'un mélange (a2),
où le rapport molaire de (b1) à (b2) est choisi dans la plage de 0,4:1 à 1,25:1,
(b3) de 0,01 à 40% en poids, par rapport au composant (b1), d'un composant B1, et
(b4) de 0 à 5% molaires, par rapport au composant (b1), d'un composé D.

**11.** Procédé de préparation de polyétheresteramides biologiquement dégradables Q1 suivant la revendication 3, d'une manière en soi connue, caractérisé en ce que l'on fait réagir un mélange essentiellement constitué

(c1) d'un polyétheresteramide P1,
(c2) de 0,01 à 50% en poids, par rapport à (c1), d'un composant B1,
et
(c3) de 0 à 5% molaires, par rapport au composant (a1) de la préparation de P1, d'un composé D,

**12.** Procédé de préparation de polyétheresteramides biologiquement dégradables Q2 suivant la revendication 4, d'une manière en soi connue, caractérisé en ce que l'on fait réagir un mélange qui se compose essentiellement

(d1) de 95 à 99,9% en poids de polyétheresteramide P1,
(d2) de 0,1 à 5% en poids d'un diisocyanate C1, et
(d3) de 0 à 5% molaires, par rapport au composant (a1) de la préparation de P1, d'un composé D.

**13.** Procédé de préparation de polymères biologiquement dégradables T1 suivant la revendication 5, d'une manière en soi connue, caractérisé en ce que l'on fait réagir le polyétheresteramide Q1 suivant la revendication 3 avec

(e1) de 0,1 à 5% en poids, par rapport au polyétheresteramide Q1 d'un diisocyanate C1, ainsi qu'avec
(e2) de 0 à 5% molaires, par rapport au composant (a1) de la préparation de P1 ainsi que de polyétheresteramide Q1, d'un composé D.

**14.** Procédé de préparation des polymères biologiquement dégradables T2 suivant la revendication 6, d'une manière en soi connue, caractérisé en ce que l'on fait réagir le polyétheresteramide Q2 avec

(f1) de 0,01 à 50% en poids, par rapport au polyétheresteramide Q2, d'un composant B1, ainsi qu'avec
(f2) de 0 à 5% molaires, par rapport au composant (a1) ) de la préparation du polyétheresteramide Q2 en passant par P1, d'un composé D.

**15.** Procédé de préparation des polymères biologiquement dégradables T3 suivant la revendication 7, d'une manière en soi connue, caractérisé en ce que l'on fait réagir

(g1) le polyétheresteramide P2, ou
(g2) un mélange, qui se compose essentiellement de polyétheresteramide P1 et de 0,01 à 50% en poids, par rapport au polyétheresteramide P1, d'un composant B1, ou
(g3) un mélange, qui se compose essentiellement de polyétheresteramides P1, qui présente une composition mutuellement différente,

avec de 0,1 à 5% en poids, par rapport à la quantité des polyétheresteramides mis en oeuvre, d'un diisocyanate C1, ainsi qu'avec
de 0 à 5% molaires, par rapport aux quantités molaires concernées de composant (a1), qui furent utilisées pour la préparation des polyétheresteramides (g1) à (g3) utilisés, d'un composé D.

**16.** Procédé de préparation des masses à mouler thermoplastiques biologiquement dégradables T4 suivant la revendication 8, d'une manière en soi connue, caractérisé en ce que l'on mélange

de 99,5 à 0,5% en poids de polyétheresteramide P1 suivant la revendication 1 ou de polyétheresteramide Q2 suivant la revendication 4, et
de 0,5 à 99,5% en poids d'un acide hydroxycarboxylique H1.

**17.** Utilisation des polymères biologiquement dégradables suivant les revendications 1 à 7 ou des masses à mouler thermoplastiques suivant la revendication 8 ou que l'on obtient suivant les revendications 9 à 16, en vue de la fabrication d'articles moulés compostables.

**18.** Utilisation des polymères biologiquement dégradables suivant les revendications 1 à 7 ou des masses à mouler thermoplastiques suivant la revendication 8 ou que l'on obtient suivant les revendications 9 à 16, pour la fabrication de colles.

**19.** Articles moulés compostables, que l'on peut obtenir par l'utilisation suivant la revendication 17.

**20.** Colles, que l'on peut obtenir par l'utilisation suivant la revendication 18.

**21.** Utilisation des polymères biologiquement dégradables suivant les revendications 1 à 7 ou des masses à mouler thermoplastiques suivant la revendication 8 ou que l'on obtient suivant les revendications 9 à 16, pour la préparation de mélanges biologiquement dégradables, contenant essentiellement les polymères conformes à la présente invention et de l'amidon.

**22.** Mélanges biologiquement dégradables, que l'on peut obtenir par l'utilisation suivant la revendication 21.

**23.** Procédé de préparation de mélanges biologiquement dégradables suivant la revendication 22, d'une manière en soi connue, caractérisé en ce que l'on mélange de l'amidon aux polymères conformes à la présente invention.

**24.** Utilisation des polymères biologiquement dégradables suivant les revendications 1 à 7 ou des masses à mouler thermoplastiques suivant la revendication 8 ou que l'on obtient suivant les revendications 9 à 16, pour la préparation de mousses biologiquement dégradables.

**25.** Mousses biologiquement dégradables, que l'on peut obtenir par l'utilisation suivant la revendication 24.

**26.** Utilisation des polymères biologiquement dégradables suivant les revendications 1 à 7 ou des masses à mouler thermoplastiques suivant la revendication 8 ou que l'on obtient suivant les revendications 9 à 16, pour la préparation d'agents d'encollage du papier.

**27.** Agents d'encollage du papier que l'on peut obtenir par l'utilisation suivant la revendication 26.